Europäisches Patentamt

(19) European Patent Office

Office européen des brevets

(11) Publication number: **0 452 155 A2**

## (12) EUROPEAN PATENT APPLICATION

(21) Application number: 91303282.7

(22) Date of filing: 12.04.91

(51) Int. Cl.[5]: **G11B 11/10**

(30) Priority: 12.04.90 JP 96816/90

(43) Date of publication of application:
16.10.91 Bulletin 91/42

(84) Designated Contracting States:
DE FR GB IT

(71) Applicant: **NIKON CORPORATION**
2-3, Marunouchi 3-chome Chiyoda-ku
Tokyo (JP)

(72) Inventor: Okamuro, Akio
Daini Wakoryo, 46-1, Tana-cho, Midori-ku
Yokohama-shi, Kanagawa-ken (JP)

(74) Representative: Burke, Steven David et al
R.G.C. Jenkins & Co. 26 Caxton Street
London SW1H 0RJ (GB)

(54) **Over-write capable magnetooptical recording medium having plastic substrate.**

(57) A multilayered magnetooptical recording medium capable of performing an over-write operation by an optical modulation method, comprises a substrate made of plastic, an undercoating layer consisting of a compound of nitrogen, oxygen, silicon, and aluminum, and formed on the substrate, and at least two perpendicular magnetizable magnetic films stacked on the substrate, one of the magnetic films functioning as a recording layer, and another magnetic film functioning as a reference layer. Preferably, the compound has a refractive index of 1.8 to 2.3.

## FIG. 56

## BACKGROUND OF THE INVENTION

### Field of the Invention

The present invention relates to an improvement of a magnetooptical recording medium capable of performing an over-write operation by an optical modulation method and, more particularly, to an improvement of a magnetooptical recording medium using a plastic substrate as a substrate.

### Related Background Art

In recent years, many efforts have been made to develop an optical recording/reproduction method which can satisfy various requirements including high density, large capacity, high access speed, and high recording/reproduction speed, and a recording apparatus, a reproduction apparatus, and a recording medium used therefor.

Of various optical recording/reproduction methods, the magnetooptical recording/reproduction method is most attractive due to its unique advantages in that information can be erased after it is recorded, and new information can be repetitively recorded.

A recording medium used in the magnetooptical recording/reproduction method has a perpendicular magnetic layer or layers as a recording layer. The magnetic layer comprises, for example, amorphous GdFe or GdCo, GdFeCo, TbFe, TbCo, TbFeCo, and the like. Concentrical or spiral tracks are normally formed on the recording layer, and information is recorded on the tracks. In this specification, one of "upward" and "downward" directions of the magnetization with respect to a film surface is defined as an "A direction", and the other one is defined as a "non-A direction". Information to be recorded is binarized in advance, and is recorded by two signals, i.e., a bit ($B_1$) having an "A-directed" magnetization, and a bit ($B_0$) having a "non-A-directed" magnetization. These bits $B_1$ and $B_0$ correspond to "1" and "0" levels of a digital signal. However, in general, the direction of magnetization of the recording tracks can be aligned in the "non-A direction" by applying a strong bias field. This processing is called "initialization". Thereafter, a bit ($B_1$) having an "A-directed" magnetization is formed on the tracks. Information is recorded in accordance with the presence/absence and/or a bit length of the bit ($B_1$). Note that a bit is called a "mark" recently.

[Principle of Bit Formation]

In the bit formation, a characteristic feature of laser, i.e., excellent coherence in space and time, is effectively used to focus a beam into a spot as small as the diffraction limit determined by the wavelength of the laser light. The focused light is radiated onto the track surface to record information by producing bits less than 1 μm in diameter on the recording layer. In the optical recording, a recording density up to $10^8$ bit/cm$^2$ can be theoretically attained, since a laser beam can be concentrated into a spot with a size as small as its wavelength.

In the magnetooptical recording, a laser beam is focused onto a recording layer to heat it, while a bias field (Hb) is externally applied to the heated portion in the direction opposite to the initialized direction. A coercivity $H_C$ of the locally heated portion is decreased below the bias field (Hb). As a result, the direction of magnetization of that portion is aligned in the direction of the bias field (Hb). In this way, reversely magnetized bits are formed.

Ferromagnetic and ferrimagnetic materials differ in the temperature dependencies of the magnetization and Hc. Ferromagnetic materials have Hc which decreases around the Curie temperature and allow information recording based on this phenomenon. Thus, information recording in ferromagnetic materials is referred to as $T_C$ recording (Curie temperature recording).

On the other hand, ferrimagnetic materials have a compensation temperature, below the Curie temperature, at which magnetization (M) becomes zero. The Hc abruptly increases around this temperature and hence abruptly decreases outside this temperature. The decreased Hc is canceled by a relatively weak bias field (Hb). Namely, recording is enabled. This process is called $T_{comp.}$ recording (compensation point recording).

In this case, however, there is no need to adhere to the Curie point or temperatures therefore, and the compensation temperature. In other words, if a bias field (Hb) capable of canceling a decreased Hc is applied to a magnetic material having the decreased Hc at a predetermined temperature higher than a room temperature, recording is enabled.

[Principle of Reproduction]

Light is an electromagnetic wave with an electromagnetic-field vector normally emanating in all directions in a plane perpendicular to the light path. When light is converted to linearly polarized beams and radiated onto a recording layer, it is reflected by its surface or passes through the recording layer. At this time, the plane of polarization rotates according to the direction of magnetization (M). This phenomenon is called the magnetic Kerr effect or magnetic Faraday effect.

For example, if the plane of polarization of the reflected light rotates through $\theta_k$ degrees for the "A-directed"

2

magnetization, it rotates through $-\theta_k$ degrees for the "non-A-directed" magnetization. Therefore, when the axis of an optical analyzer (polarizer) is set perpendicular to the plane inclined at $-\theta_k$, the light reflected by "non-A-direction" magnetized bit ($B_0$) cannot pass through the analyzer. On the contrary, a product of $(\sin2\theta_k)^2$ an the light reflected by a bit ($B_1$) magnetized along the "A direction" passes through the analyzer and becomes incident on a detector (photoelectric conversion means). As a result, the bit ($B_1$) magnetized along the "A direction" looks brighter than the bit ($B_0$) magnetized along the "non-A direction", and the detector produces a stronger electrical signal for the bit ($B_1$). The electrical signal from the detector is modulated in accordance with the recorded information, thus reproducing the information.

It is conventionally difficult to find out one magnetic material which has a low Curie temperature, allows easy recording, has a high coercivity and high preservation stability, has large $\theta_k$, and a high C/N ratio during reproduction (reading). For this reason, a multilayered magnetooptical recording medium in which necessary functions are separated, and two different magnetic material layers are stacked is proposed (Japanese Laid-Open Patent Application No. 57-78652). This recording medium comprises a two-layered film including a high-coercivity perpendicular magnetic layer having a low Curie temperature, and a low-coercivity perpendicular magnetic layer having a high Curie temperature. The high- and low-coercivity layers are exchange-coupled to each other. For this reason, the high-coercivity layer performs information recording and preservation, and recorded information is transferred to the low-coercivity layer. Thus, the low-coercivity layer having the high Curie temperature and large $\theta_k$ performs information reading.

Japanese Laid-Open Patent Application No. 57-78652 discloses a two-layered recording medium which employs a Tb-Fe amorphous alloy as the high-coercivity layer, and a Gd-Fe amorphous alloy as the low-coercivity layer as only one embodiment.

A multilayered magnetooptical recording medium which comprises a first layer serving as a recording layer and a second layer serving as a reference layer, and can perform an over-write operation by an optical modulation method utilizing exchange coupling between the two layers and differences between their Curie temperatures and coercivities (i.e., without modulating a direction and strength of a magnetic field) was invented, and filed as a patent application (Japanese Laid-Open Patent Application No. 62-175948). This invention will be quoted as a "basic Invention" hereinafter.

In any case, the multilayered magnetooptical recording medium requires an exchange coupling force $\sigma_w$ (called an interface wall energy in the basic invention) between magnetic layers.

[Description of the Basic Invention]

The basic invention uses a multilayered magnetooptical recording medium constituted by stacking at least two layers, i.e., a first layer which comprises a perpendicular magnetizable magnetic thin film as a recording layer, and a second layer which comprises a perpendicular magnetizable magnetic thin film as a reference layer. Information is recorded in the first layer (in some cases, also in the second layer) by a bit having an "A-directed" magnetization, and a bit having a "non-A-directed" magnetization.

In this medium, the direction of magnetization of the second layer can be aligned in an "A direction" by an external means (e.g., an initial field Hini. or an exchange coupling force from a third layer), and at this time, the direction of magnetization of the first layer is not reversed. Furthermore, the direction of magnetization of the second layer which has been aligned in the "A direction" is not reversed upon application of an exchange coupling force from the first layer. In contrast to this, the direction of magnetization of the first layer is not reversed upon application of an exchange coupling force from the second layer aligned in the "A direction".

The second layer has a lower coercivity $H_C$ and a higher Curie temperature $T_C$ than those of the first layer.

According to a recording method of the basic invention, the direction of magnetization of the second layer of the recording medium is aligned in the "A direction" by an external means. This process will be specially referred to as "initialization" in this specification.

Thereafter, a laser beam which is pulse-modulated in accordance with two-valued information is radiated on the medium. The laser beam intensity has high and low levels. These high and low levels correspond to high and low levels of a pulse. Note that low level is higher than very low level* to be radiated on the medium in a reproduction mode.

A bias field Hb whose direction and strength are not modulated or an exchange coupling force from a fourth layer is applied to a medium portion irradiated with the beam. The bias field Hb cannot be focused to a size as small as the portion irradiated with the beam (spot region), and a region where the bias field Hb is applied is considerably larger than the spot region.

When a low-level beam is radiated, a bit in which the direction of magnetization of the first layer is one of the "A direction" and the "non-A direction" is formed regardless of the direction of magnetization of a previous bit.

When a high-level beam is radiated, a bit in which the direction of magnetization of the first layer is the other direction is formed regardless of the direction of magnetization of the previous bit.

Thus, the over-write operation is completed.

In the basic invention, a laser beam is pulse-modulated according to information to be recorded. However, this procedure itself has been performed in the conventional magnetooptical recording method, and a means for pulse-modulating the beam intensity on the basis of two-valued information to be recorded is a known means. For example, see "THE BELL SYSTEM TECHNICAL JOURNAL, Vol. 62 (1983), pp. 1923 -1936 for further details. Therefore, the modulating means is available by partially modifying the conventional beam modulating means if required high and low levels of the beam intensity are given. Such a modification would be easy for those who are skilled in the art if high and low levels of the beam intensity are given.

Another characteristic feature of the basic invention lies in high and low levels of the beam intensity. More specifically, when the beam intensity is at high level, "A-directed" magnetization of a reference layer (second layer) is reversed to the "non-A direction" by means of a bias field (Hb), and a bit having the "non-A-directed" [or "A-directed"] magnetization is thus formed in a recording layer (first layer) by means of the "non-A-directed" magnetization of the second layer. When the beam intensity is at low level, a bit having the "A-directed" [or "non-A-directed"] magnetization is formed in the first layer by means of the "A-directed" magnetization of the second layer.

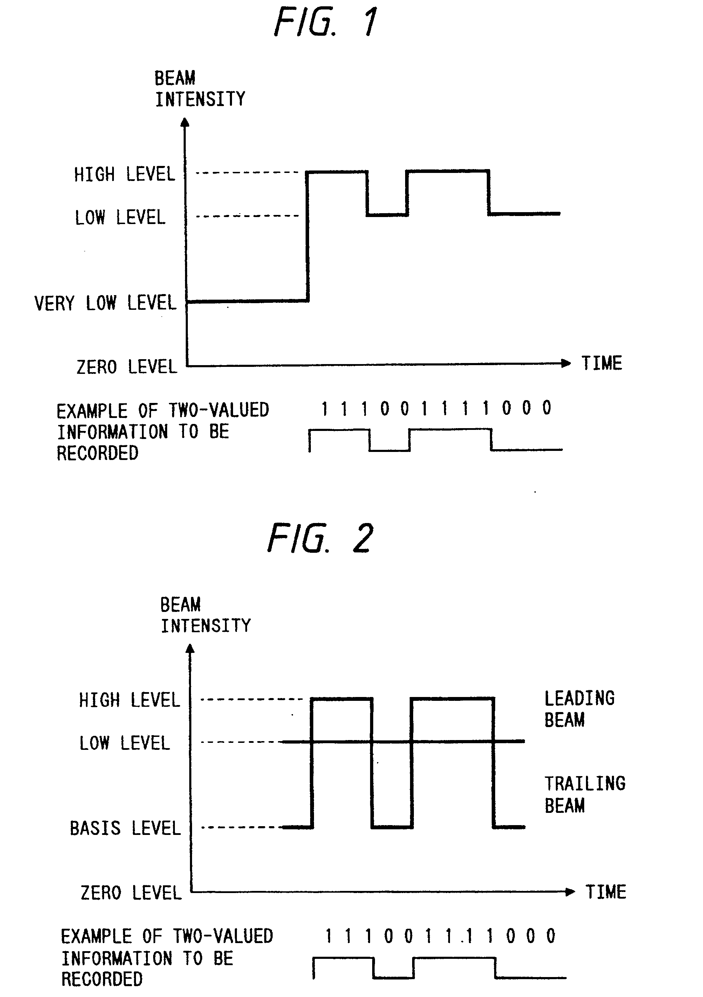

As is well known, even if recording is not performed, a laser beam is often turned on at very low level* in order to, for example, access a predetermined recording position on the medium. When the laser beam is also used for reproduction, the laser beam is often turned on at an intensity of the very low level*. In this invention, the intensity of the laser beam may be set at this very low level*. However, low level for forming a bit is higher than the very low level*. Therefore, the output waveform of the laser beam of the basic invention is as shown in Fig. 1.

Although not described in the specification of the basic invention, a recording beam need not always be a single beam but may be two proximity beams in the basic invention. More specifically, a leading beam may be used as a low-level laser beam (erasing beam) which is not modulated in principle, and a trailing beam may be used as a high-level laser beam (writing beam) which is modulated in accordance with information. In this case, the trailing beam is pulse-modulated between high level and base level (equal to or lower than low level, and its output may be zero). In this case, an output waveform is as shown in Fig. 2.

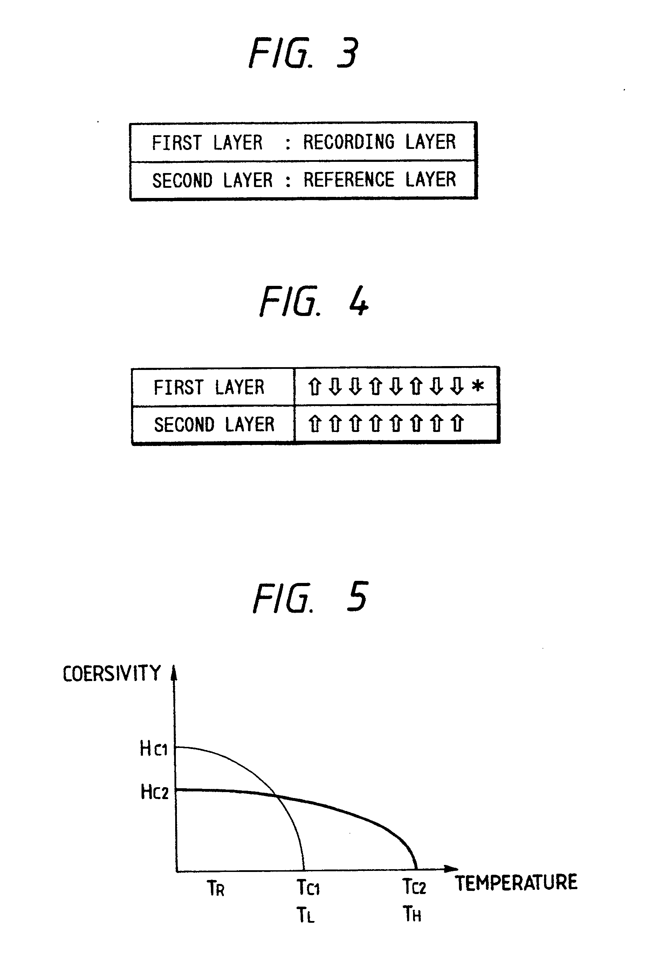

A medium used in the basic invention is roughly classified into a first or second category. In either category, a recording medium has a multilayered structure including a recording layer (first layer) and a reference layer (second layer). Fig. 3 illustrates this recording medium.

The first layer is the recording layer, which exhibits a high coercivity at a room temperature, and has a low magnetization reversing temperature. The second layer is the reference layer, which exhibits a relatively lower coercivity at a room temperature and has a higher magnetization reversing temperature than those of the first layer. Note that each of the first and second layers may comprise a multilayered structure. If necessary, a third layer may be interposed between the first and second layers. In addition, a clear boundary between the first and second layers need not be formed, and one layer can be gradually converted into the other layer.

In the first category, when the coercivity of the recording layer (first layer) is represented by $H_{C1}$; that of the reference layer (second layer), $H_{C2}$; a Curie temperature of the first layer, $T_{C1}$; that of the second layer, $T_{C2}$; a room temperature, $T_R$; a temperature of the recording medium obtained when a low-level laser beam is radiated, $T_L$; that obtained when a high-level laser beam is radiated, $T_H$; a coupling field applied to the first layer, $H_{D1}$; and a coupling field applied to the second layer, $H_{D2}$, the recording medium satisfies Formula 1 below, and satisfies Formulas 2 to 5 at the room temperature:

$$T_R < T_{C1} \approx T_L < T_{C2} \approx T_H \qquad \text{...Formula 1}$$
$$H_{C1} > H_{C2} + \left| H_{D1} \mp H_{D2} \right| \qquad \text{...Formula 2}$$
$$H_{C1} > H_{D1} \qquad \text{...Formula 3}$$
$$H_{C2} > H_{D2} \qquad \text{...Formula 4}$$
$$H_{C2} + H_{D2} < \left| Hini. \right| < H_{C1} \pm H_{D1} \qquad \text{...Formula 5}$$

In the above formulas, symbol "$\approx$" means "equal to" or "substantially equal to ($\pm20°C$)". In addition, of double signs $\pm$ and $\mp$, the upper sign corresponds to an A (antiparallel) type medium, and the lower sign corresponds to a P (parallel) type medium (these media will be described later). Note that a ferromagnetic medium belongs to a P type.

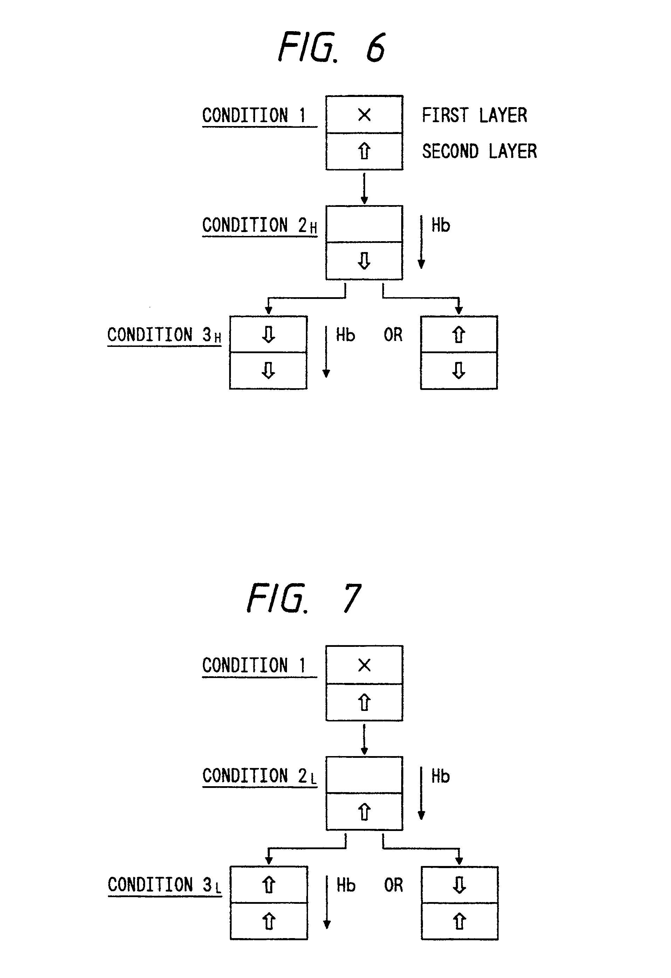

The relationship between a coercivity and a temperature is as shown in the graph of Fig. 5. In Fig. 5, a thin curve represents the characteristics of the first layer, and a bold curve represents those of the second layer.

Therefore, when an external means, e.g., an initial field (Hini.) is applied to this recording medium at the room temperature, the direction of magnetization of only the reference layer (second layer) is reversed without reversing that of the recording layer (first layer) according to Formula 5. When the initial field (Hini.) is applied to the medium before recording, only the second layer can be magnetized in the "A direction" (in the drawings, the "A direction" is indicated by an upward arrow ⇑, and the "non-A direction" is indicated by a downward arrow

for the sake of simplicity). If the initial field Hini. becomes zero, the direction of magnetization ⇑ of the second layer can be left unchanged without being re-reversed according to Formula 4.

Fig. 4 schematically shows a state wherein only the second layer is magnetized by the external means in the "A direction" ⇑ immediately before recording.

The direction of magnetization* in the first layer represents previously recorded information. In the following description, since the initial direction of magnetization of the first layer can be disregarded, it is indicated by X, as shown in CONDITION 1 in Figs. 6 and 7.

A high-level laser beam is radiated on the medium in CONDITION 1 in Fig. 6 to increase a medium temperature to $T_H$. Since $T_H$ is higher than the Curie temperature $T_{C1}$, the magnetization of the recording layer (first layer) disappears. In addition, since $T_H$ is near the Curie temperature $T_{C2}$, the magnetization of the reference layer (second layer) also disappears completely or almost completely. The bias field (Hb) in the "A direction" or "non-A direction" is applied to the medium in accordance with a type of medium. The bias field (Hb) can be a stray field from the medium itself. For the sake of simplicity, assume that the bias field (Hb) in the "non-A direction" is applied to the medium. Since the medium is moving, a given irradiated portion is immediately separated apart from the laser beam, and is cooled. When the medium temperature is decreased under the presence of Hb, the direction of magnetization of the second layer is reversed to the "non-A direction" based or Hb (CONDITION $2_H$ in Fig. 6).

When the medium is further cooled and the medium temperature is decreased slightly below $T_{C1}$, magnetization of the first layer appears again. In this case, the direction of magnetization of the first layer is influenced by that of the second layer due to a magnetic coupling (exchange coupling) force. As a result, magnetization ⇓ (the P type medium) or ⇑ (the A type medium) is formed according to the type of medium (CONDITION $3_H$ in Fig. 6).

A change in condition caused by the high-level laser beam is called a high-temperature cycle herein.

A low-level laser beam is radiated on the medium in CONDITION 1 in Fig. 7 to increase the medium temperature to $T_L$. Since $T_L$ is near the Curie temperature $T_{C1}$, the magnetization of the first layer disappears completely or almost completely. However, since $T_L$ is lower than the Curie temperature $T_{C2}$, the magnetization of the second layer does not disappear (CONDITION $2_L$ in Fig. 7).

In CONDITION $2_L$, although the bias field (Hb) is unnecessary, it cannot be turned on or off at high speed (within a short period of time). Therefore, the bias field (Hb) in the high-temperature cycle is left applied inevitably.

However, since the $H_{C2}$ is kept high, the magnetization of the second layer will not be reversed by Hb. Since the medium is moving, a given irradiated portion is immediately separated apart from the laser beam, and is cooled. As cooling progresses, the magnetization of the first layer appears again. The direction of magnetization appearing in this case is influenced by that of the second layer due to the magnetic coupling force. As a result, ⇑ (P type) or ⇓ (A type) magnetization appears according to the type of medium (CONDITION $3_L$ in Fig. 7).

A change in condition caused by the low-level laser beam is called a low-temperature cycle herein.

As described above, bits having either magnetization ⇑ or ⇓, which are opposite to each other, are formed in the high- and low-temperature cycles although the direction of magnetization of the first layer depends on types of medium. More specifically, an over-write operation is enabled by pulse-modulating the laser beam between high level (high-temperature cycle) and low level (low-temperature cycle) in accordance with information to be recorded.

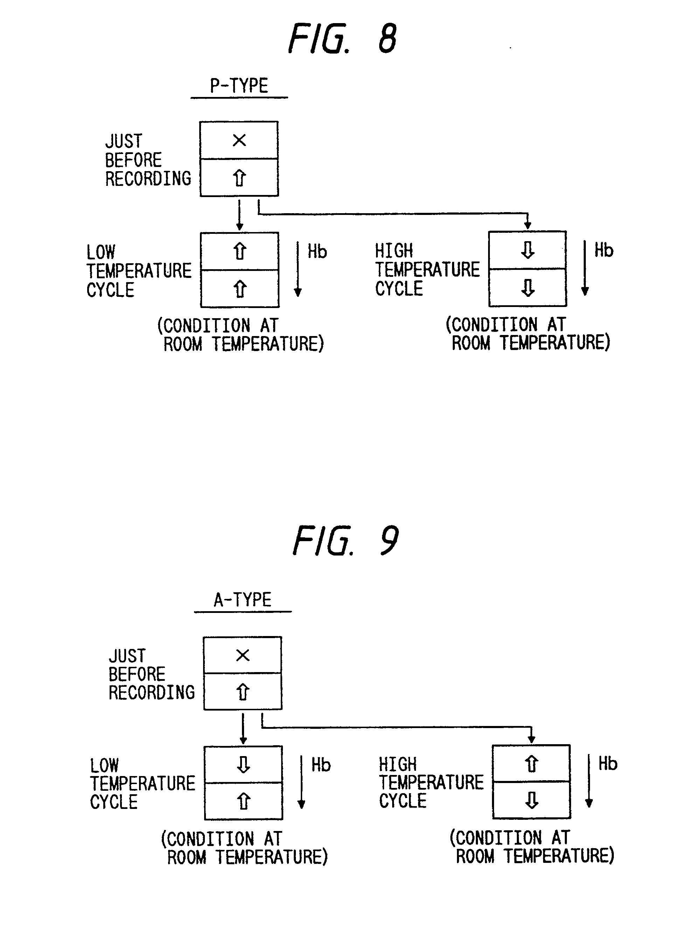

Figs. 8 and 9 show changes in direction of magnetization in high- and low-temperature cycles in units of P- and A-type media.

In the above description, both the first and second layers have no compensation temperature $T_{comp.}$ between the room temperature and the Curie temperature. However, when the compensation temperature $T_{comp.}$ is present, if the medium temperature exceeds it,① the direction of magnetization is reversed, and② A and P types are reversed. For these reasons, a description must be complicated accordingly. In this case, the direction of the bias field is opposite to the direction ↓ in the above description at the room temperature. That is, Hb in the same direction as the direction ↑ of magnetization of the second layer aligned in the "initialization" is applied.

A recording medium normally has a disk shape, and is rotated during recording. For this reason, a recorded portion (bit) is influenced again by an external field, e.g., Hini. during one revolution. As a result, the direction of magnetization of the second layer is aligned in the original "A direction" ⇑. However, at the room temperature, the magnetization of the second layer can no longer influence that of the first layer, and the recorded information can be held.

If linearly polarized light is radiated on the first layer, since light reflected thereby includes information, the information can be reproduced as in the conventional magnetooptical recording medium. Note that a method of transferring information in the first layer to the second layer aligned in the original "A direction" ⇑ by applying a reproduction field $H_R$ before reproduction or a method of naturally transferring information in the first layer to the second layer as soon as the influence of Hini. disappears without applying the reproduction field $H_R$ is also available depending on composition designs of the first and second layers. In this case, information may be reproduced from the second layer.

A perpendicular magnetic film constituting each of the recording layer (first layer) and the reference layer (second layer) is selected from the group consisting of① ferromagnetic and ferrimagnetic materials having no compensation temperature and having a Curie temperature, and② an amorphous or crystalline ferrimagnetic material having both the compensation temperature and the Curie temperature.

The first category which utilizes the Curie temperature as the magnetization reversing temperature has been described. In contrast to this, the second category utilizes decreased $H_C$ at a predetermined temperature higher than the room temperature. In a medium of the second category, substantially the same description as the first category can be applied except that a temperature $T_{S1}$ at which the recording layer (first layer) is magnetically coupled to the reference layer (second layer) is used in place of $T_{C1}$ in the first category, and a temperature $T_{S2}$ at which the direction of magnetization of the second layer is reversed by Hb is used in place of $T_{C2}$.

In the second category, when the coercivity of the first layer is represented by $H_{C1}$; that of the second layer, $H_{C2}$; a temperature at which the first layer is magnetically coupled to the second layer, $T_{S1}$; a temperature at which the magnetization of the second layer is reversed by Hb, $T_{S2}$; a room temperature, $T_R$; a medium temperature obtained when a low-level laser beam is radiated, $T_L$; that obtained when a high-level laser beam is radiated, $T_H$; a coupling field applied to the first layer, $H_{D1}$; and a coupling field applied to the second layer, $H_{D2}$, the recording medium satisfies Formula 6 below, and satisfies Formulas 7 to 10 at the room temperature:

$$T_R < T_{S1} \approx T_L < T_{S2} \approx T_H \qquad \text{...Formula 6}$$
$$H_{C1} > H_{C2} + |H_{D1} \mp H_{D2}| \qquad \text{...Formula 7}$$
$$H_{C1} > H_{D1} \qquad \text{...Formula 8}$$
$$H_{C2} > H_{D2} \qquad \text{...Formula 9}$$
$$H_{C2} + H_{D2} < |Hini.| < H_{C1} \pm H_{D1} \qquad \text{...Formula 10}$$

In the above formulas, of double signs ± and ∓, the upper sign corresponds to an A (antiparallel) type medium, and the lower sign corresponds to a P (parallel) type medium (these media will be described later).

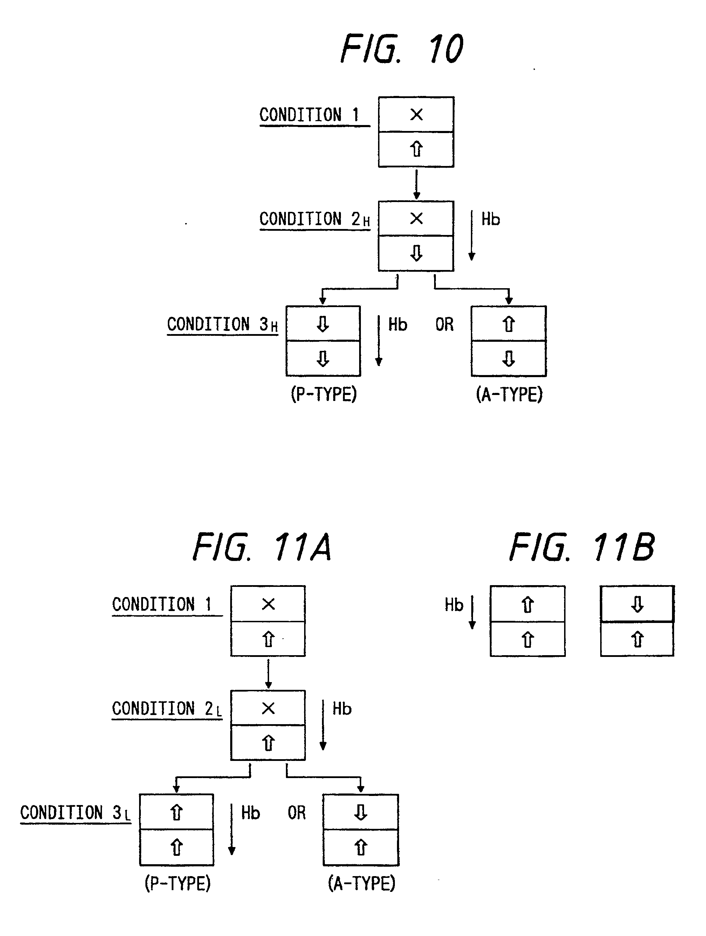

In the second category, when the medium is at the high temperature $T_H$, the magnetization of the second layer does not disappear, but is sufficiently weak. The magnetization of the first layer disappears, or is sufficiently weak. Even if sufficiently weak magnetization is left in both the first and second layers, the bias field Hb ↓ is sufficiently large, and the Hb ↓ forces the direction of magnetization of the second layer and that of the first layer in some cases to follow that of the Hb ↓ (CONDITION $2_H$ in Fig. 10).

Thereafter, the second layer influences the first layer via $\sigma_w$① immediately, or② when cooling progresses after radiation of the laser beam is stopped and the medium temperature is decreased below $T_H$, or③ when the irradiated portion is away from Hb, thereby aligning the direction of magnetization of the first layer in a stable direction. As a result, CONDITION $3_H$ is established. When the magnetization of the first layer of a bit in the previous recorded state has a stable direction, its direction is left unchanged (CONDITION $3_H$ in Fig. 10).

On the other hand, when the medium is at the low temperature $T_L$, both the first and second layers do not lose their magnetization. However, the magnetization of the first layer is sufficiently weak (CONDITION $2_L$ in Fig. 11).

More specifically, in this case, there are two types of bits. The P-type medium will be exemplified below with reference to Fig. 11A.

In right CONDITION $2_L'$-2 in Fig. 11A, a magnetic wall (indicated by a bold line) is generated between the first and second layers, and the medium is in a relatively unstable (quasi-stable) condition. More specifically, the direction of magnetization of the first layer is influenced by an exchange coupling force $\sigma_w$ from the second layer, whose influence is larger than the influence of Hb. In this case, since the second layer has a sufficient magnetization, its direction of magnetization will not be reversed by Hb.

For this reason, when the temperature of the first layer is increased to some extent and the coercivity $H_{C1}$ is decreased, the magnetization of the first layer is directed in a stable direction without increasing the temperature of the first layer up to the Curie temperature $T_{C1}$ at which the magnetization of the first layer disappears. More specifically, CONDITION $2_L'$-1 is established.

Left CONDITION $2_L'$-1 is left unchanged.

As a result, CONDITION $3_L$ is established regardless of Hb ↓.

Fig. 11B summarizes changes in direction of magnetization from CONDITION 1 to CONDITION $3_L$.

In the above description, both the first and second layers have no compensation temperature $T_{comp.}$ between the room temperature and the Curie temperature. However, when the compensation temperature $T_{comp.}$ is present, if the medium temperature exceeds it, ① the direction of magnetization is reversed, and ② A and P types are reversed. For these reasons, a description must be complicated accordingly. In this case, the direction of the bias field is opposite to the direction $\downarrow$ in the above description at the room temperature.

In both the first and second categories, the recording medium is preferably constituted by the recording layer (first layer) and the reference layer (second layer) each of which comprises an amorphous ferrimagnetic material selected from transition metal (e.g., Fe, Co) - heavy rare earth metal (e.g., Gd, Tb, Dy, and the like) alloy compositions.

When the materials of both the first and second layers are selected from the transition metal-heavy rare earth metal alloy compositions, the direction and level of magnetization appearing outside the alloys are determined by the relationship between the direction and level of spin of transition metal (to be abbreviated to as TM hereinafter) atoms, and those of heavy rare earth metal (to be abbreviated to as RE hereinafter) atoms inside the alloys. For example, the direction and level of TM spin are represented by a dotted vector ⇡, those of RE spin are represented by a solid vector ↑, and the direction and level of magnetization of the entire alloy are represented by a double-solid vector ⇑. In this case, the vector ⇑ is expressed as a sum of the vectors ⇡ and ↑. However, in the alloy, the vectors ⇡ and ↑ are directed in the opposite directions due to the mutual effect of the TM spin and the RE spin. Therefore, when strengths of these vectors are equal to each other, the sum of ⇣ and ↑ or the sum of ↓ and ⇡ is zero (i.e., the level of magnetization appearing outside the alloy becomes zero). The alloy composition making the sum of vectors zero is called a compensation composition. When the alloy has another composition, it has a strength equal to a difference between the strengths of the two spins, and has a vector (⇑ or ⇓) having a direction equal to that of the larger vector. Magnetization of this vector appears outside the alloy. For example, ↑⇣ appears as ⇑, and ↑⇣ appears as ⇓.

When one of the strengths of the vectors of the RE and TM spins is larger than the other, the alloy composition is referred to as "oo rich" named after the larger spin name (e.g., RE rich).

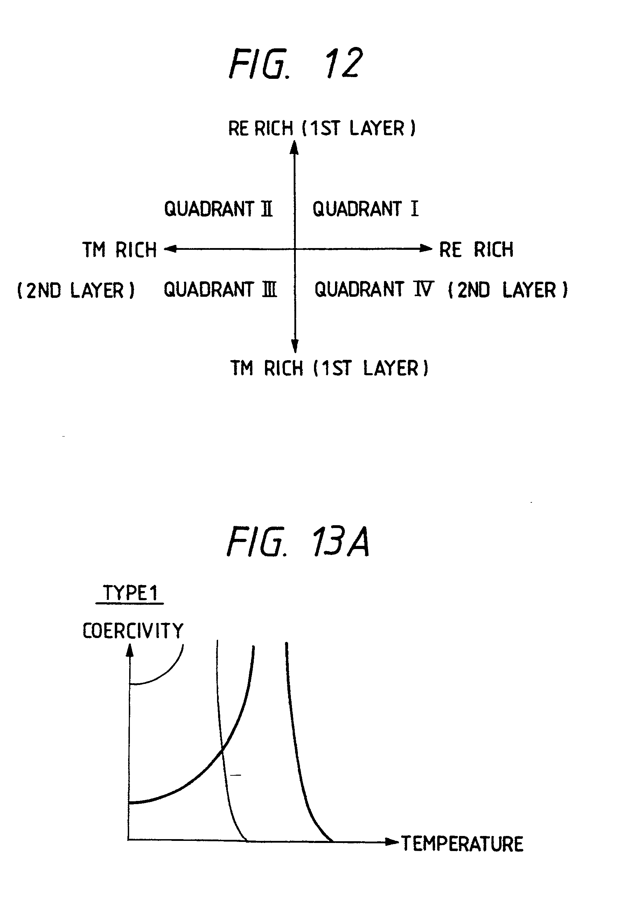

Both the first and second layers can be classified into TM rich and RE rich compositions. Therefore, as shown in Fig. 12, when the composition of the first layer is plotted along the ordinate and that of the second layer is plotted along the abscissa, the types of medium as a whole of the basic invention can be classified into four quadrants. The P type medium described above belongs to Quadrants I and III, and the A type medium belongs to Quadrants II and IV.

In Fig. 12, the intersection of the abscissa and the ordinate represents the compensation composition of the two layers.

In view of a change in coercivity against a change in temperature, a given alloy composition has characteristics wherein the coercivity temporarily increases infinitely and then abruptly decreases before a temperature reaches the Curie temperature (at which the coercivity is zero). The temperature corresponding to the infinite coercivity is called a compensation temperature ($T_{comp.}$). No compensation temperature is present between the room temperature and the Curie temperature in the TM rich alloy composition. The compensation temperature below the room temperature is nonsense in the magnetooptical recording, and hence, it is assumed in this specification that the compensation temperature is present between the room temperature and the Curie temperature.

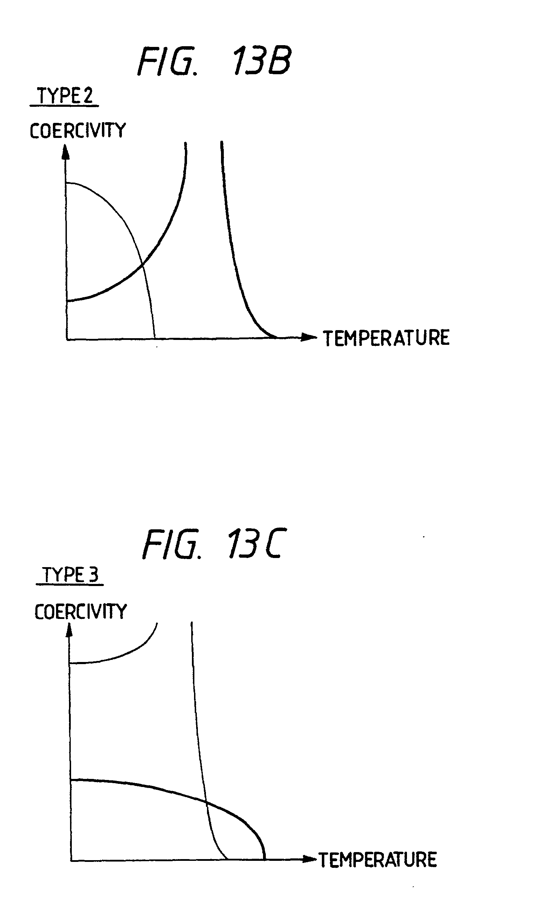

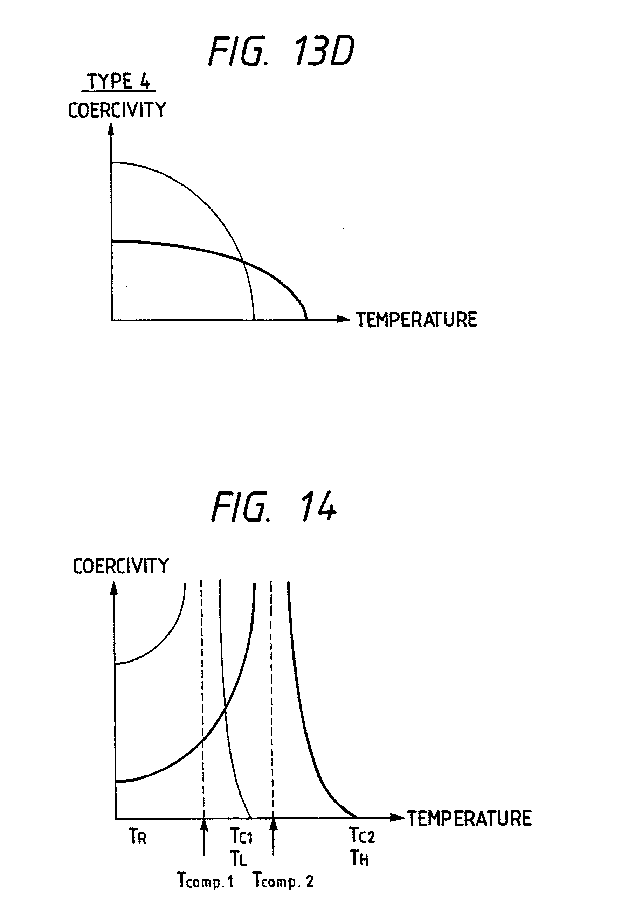

If the first and second layers are classified in view of the presence/absence of the compensation temperature, the recording medium can be classified into four types. A medium in Quadrant I includes all the four types of media. Figs. 13A to 13D show "graphs of the relationship between the coercivity and temperature" for the four types of media. Note that thin curves represent characteristics of the first layer, and bold curves represent those of the second layer.

When the recording layer (first layer) and the reference layer (second layer) are classified in view of their RE or TM rich characteristics and in view of the presence/absence of the compensation temperature, recording media can be classified into the following nine classes.

## Table 1

| Class | Quadrant I (P type) | | Type |
|---|---|---|---|
| | First Layer: RE Rich | Second Layer: TM Rich | |
| 1 | $T_{comp.}$ | $T_{comp.}$ | 1 |
| 2 | No $T_{comp.}$ | $T_{comp.}$ | 2 |
| 3 | $T_{comp.}$ | No $T_{comp.}$ | 3 |
| 4 | No $T_{comp.}$ | No $T_{comp.}$ | 4 |
| Class | Quadrant II (A type) | | Type |
| | First Layer: RE Rich | Second Layer: TM Rich | |
| 5 | $T_{comp.}$ | No $T_{comp.}$ | 3 |
| 6 | No $T_{comp.}$ | No $T_{comp.}$ | 4 |
| Class | Quadrant III (P type) | | Type |
| | First Layer: TM Rich | Second Layer: TM Rich | |
| 7 | No $T_{comp.}$ | No $T_{comp.}$ | 4 |
| Class | Quadrant IV (A type) | | Type |
| | First Layer: TM Rich | Second Layer: RE Rich | |
| 8 | No $T_{comp.}$ | $T_{comp.}$ | 2 |
| 9 | No $T_{comp.}$ | No $T_{comp.}$ | 4 |

The principle of an over-write operation will be exemplified in detail below for each of Classes shown in Table 1. As an external means in the "initialization", an initial field Hini. is used. In place of Hini., an exchange coupling force from a third layer may be used. As for a bias field Hb, an exchange coupling force from a fourth layer may be used in place of Hb.

The principle of an over-write operation will be described in detail below using a medium No. 1 belonging to Class 1 (P type, Quadrant I, Type 1).

The medium No. 1 satisfies Formula 11:

$$T_R < T_{comp.1} < T_{C1} \approx T_L \approx T_{comp.2} < T_{C2} \approx T_H \qquad \text{...Formula 11}$$

Fig. 14 shows the above-mentioned relationship as a graph. Note that thin curves represent characteristics of the first layer, and bold curves represent those of the second layer.

A condition that reverses only the direction of magnetization of the second layer by the initial field Hini. at

8

the room temperature $T_R$ without reversing that of the first layer is represented by Formula 12. This medium No. 1 satisfies Formula 12:

$$H_{C1} > H_{C2} + \frac{\sigma_w}{2M_{s1}t_1} + \frac{\sigma_w}{2M_{s2}t_2} \quad \text{...Formula 12}$$

where

$H_{C1}$: coercivity of first layer

$H_{C2}$: coercivity of second layer

$M_{S1}$: saturation magnetization of first layer

$M_{S2}$: saturation magnetization of second layer

$t_1$ : film thickness of first layer

$t_2$ : film thickness of second layer

$\sigma_w$ : exchange coupling force or interface wall energy

At this time, a condition for the field Hini. is represented by Formula 15. If the field Hini. disappears, the reversed direction of magnetization of the second layer is influenced by the magnetization of the first layer due to an exchange coupling force. The conditions that can hold the direction of magnetization of the second layer without re-reversing it are represented by Formulas 13 and 14. The medium No. 1 satisfies Formulas 13 and 14:

$$H_{C1} > \frac{\sigma_w}{2M_{s1}t_1} \quad \text{...Formula 13}$$

$$H_{C2} > \frac{\sigma_w}{2M_{s2}t_2} \quad \text{...Formula 14}$$

$$H_{C2} + \frac{\sigma_w}{2M_{s2}t_2} < |Hini.| < H_{C1} - \frac{\sigma_w}{2M_{s1}t_1} \quad \text{...Formula 15}$$

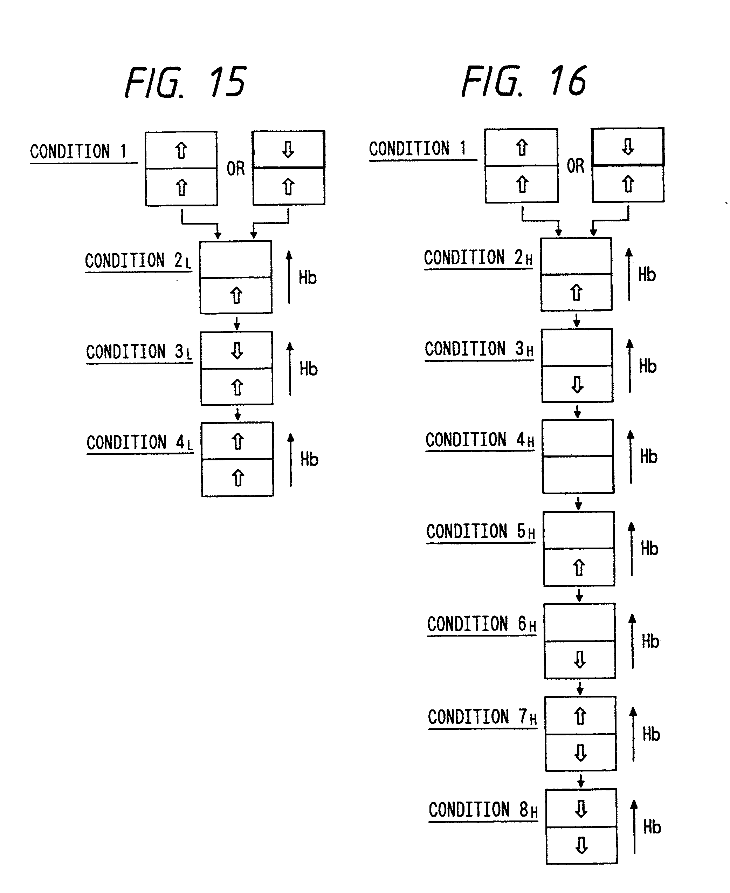

The magnetization of the second layer of the recording medium which satisfies conditions given by Formulas 12 to 14 at the room temperature is aligned in, e.g., the "A direction" ⇑ $(\uparrow\!\!\downarrow)$ by Hini. which satisfied Formula 15 immediately before recording. At this time, the first layer is left in the recorded state (CONDITION 1 in Figs. 15 and 16).

CONDITION 1 (in Figs. 15 and 16, a bold line represents a magnetic wall) is held immediately before recording. Note that the bias field (Hb) is applied in a direction ↑.

A low-temperature cycle will be described below with reference to Fig. 15.

— Low-temperature Cycle —

A low-level laser beam is radiated on the medium in CONDITION 1 to increase the medium temperature to $T_L$. Since $T_L$ is almost equal to the Curie temperature $T_{C1}$ of the first layer, its magnetization disappears (CONDITION $2_L$).

In CONDITION $2_L$, when the irradiated portion falls outside the spot region of the laser beam, the medium temperature begins to be decreased. When the medium temperature is decreased slightly below $T_{C1}$, RE and TM spins $(\uparrow\!\!\downarrow)$ of the second layer influence those of the first layer due to the exchange coupling force.

That is, a force acts to respectively align RE spins (↑) and TM spins $(\downarrow)$. As a result, magnetization ↑↓ , i.e., ↓ overcomes the bias field ↑ Hb, and appears in the first layer (CONDITION $3_L$). Since the temperature of this condition is equal to or higher than $T_{comp.1}$, the TM spin is larger than the RE spin.

When the medium temperature is cooled below $T_{comp.1}$, the relationship between the RE spin and the TM spin of the first layer is reversed

$$(\uparrow\!\!\downarrow \rightarrow \uparrow\!\!\downarrow)$$

As a result, the direction of magnetization of the first layer is reversed to ⇑ (CONDITION $4_L$).

CONDITION $4_L$ is maintained even when the medium temperature is decreased to the room temperature. As a result, the magnetization of the first layer is aligned in the "A direction" ⇑ regardless of a previously recorded bit, and a bit having this direction is formed.

A high-temperature cycle will be described below with reference to Fig. 16.

— High-temperature Cycle —

When a high-level laser beam is radiated on the medium in CONDITION 1 to increase the medium temperature to $T_L$, since $T_L$ is almost equal to the Curie temperature $T_{C1}$ of the first layer, its magnetization disappears (CONDITION $2_H$).

When beam radiation is further continued, the medium temperature is further increased. When the medium temperature slightly exceeds $T_{comp.2}$ of the second layer, the relationship between the strengths of RE and TM spins is reversed

$$(\uparrow \hspace{-0.4em}\downarrow \; \rightarrow \; \uparrow \hspace{-0.4em}\downarrow)$$

although their directions are left unchanged. For this reason, the magnetization of the second layer is reversed to the "non-A direction" $\,\!^{\downarrow}$ (CONDITION $3_H$).

However, since $H_{C2}$ is still large at this temperature, the magnetization of the second layer will not be reversed by ↑ Hb. When the temperature is further increased and reaches $T_H$, the temperature of the second layer becomes almost equal to the Curie temperature $T_{C2}$, and magnetization of the second layer also disappears (CONDITION $4_H$).

When the irradiated portion falls outside the spot region of the laser beam in CONDITION $4_H$, the medium temperature begins to fall. When the medium temperature is decreased slightly below $T_{C2}$, magnetization appears in the second layer. In this case, magnetization ⇑ $(\downarrow \hspace{-0.4em}\uparrow)$ appears due to ↑ Hb (CONDITION $5_H$). However, since the temperature is still higher than $T_{C1}$, no magnetization appears in the first layer.

When the medium temperature is further decreased below $T_{comp.2}$, the relationship between the strengths of RE and TM spins is reversed

$$(\downarrow \hspace{-0.4em}\uparrow \; \rightarrow \; \downarrow \hspace{-0.4em}\uparrow)$$

although their directions are left unchanged. As a result, the magnetization of the entire alloy is reversed from ⇑ to the "non-A direction" $\,\!^{\downarrow}$ (CONDITION $6_H$).

In CONDITION $6_H$, since the medium temperature is still higher than $T_{C1}$, the magnetization of the first layer is kept disappearing. In addition, since $H_{C2}$ at this temperature is large, the magnetization $\,\!^{\downarrow}$ of the second layer will not be reversed by ↑ Hb.

When the temperature is further decreased slightly below $T_{C1}$, magnetization appears in the first layer. In this case, the exchange coupling force from the second layer acts to respectively align the RE spins (↓) and TM spins $(\uparrow)$. Since the temperature of the first layer is equal to or higher than $T_{comp.1}$, magnetisation $\downarrow \hspace{-0.4em}\uparrow$, i.e., ⇑ appears in the first layer. This condition corresponds to CONDITION $7_H$.

When the medium temperature is decreased from the temperature in CONDITION $7_H$ below $T_{comp.1}$, the relationship between the strengths of the RE spin and the TM spin of the first layer is reversed

$$(\downarrow \hspace{-0.4em}\uparrow \; \rightarrow \; \downarrow \hspace{-0.4em}\uparrow)\,.$$

As a result, magnetization $\,\!^{\downarrow}$ appears (CONDITION $8_H$).

The medium temperature is then decreased from the temperature in CONDITION $8_H$ to the room temperature. Since $H_{C1}$ at the room temperature is sufficiently large, the magnetization of the first layer will not be reversed by ↑ Hb, and CONDITION $8_H$ can be maintained. Thus, a bit in the "non-A direction" is formed.

The principle of the over-write operation will be described in detail below using a specific medium No. 2 belonging to a recording medium of Class 2 (P type, Quadrant I, Type 2) shown in Table 1.

This medium No. 2 has a relation given by Formula 16:

$$T_R < T_{C1} \approx T_L \approx T_{comp.2} < T_{C2} \approx T_H \qquad \text{...Formula 16}$$

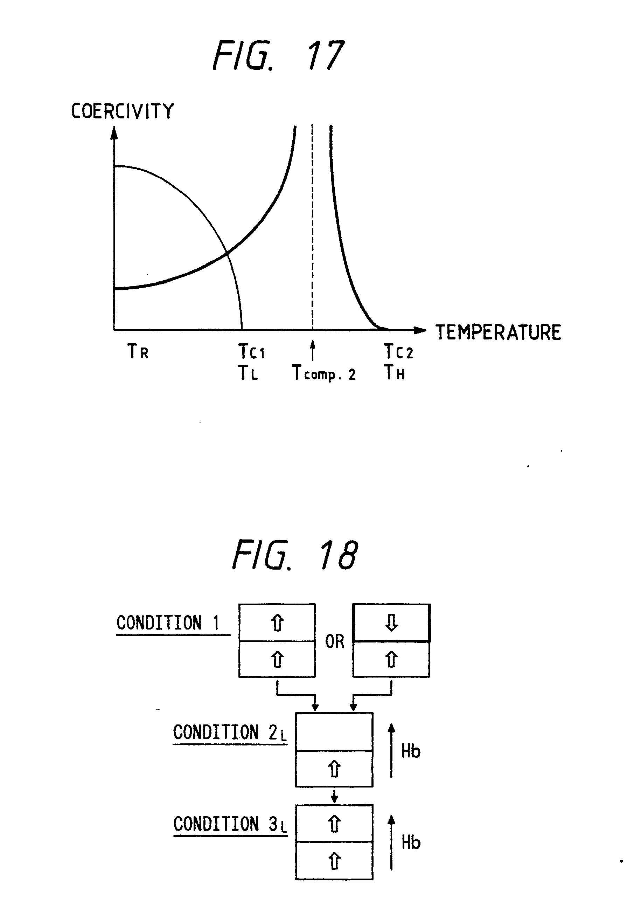

Fig. 17 shows this relation as a graph.

A condition for reversing only the magnetization of the second layer by the initial field Hini. without reversing that of the first layer at the room temperature $T_R$ is given by Formula 17. This medium No. 2 satisfies Formula 17:

$$H_{C1} > H_{C2} + \frac{\sigma_w}{2M_{s1}t_1} + \frac{\sigma_w}{2M_{s2}t_2} \qquad \text{...Formula 17}$$

In this case, a condition for Hini. is represented by Formula 20. When Hini. disappears, the reversed magnetization of the second layer is influenced by that of the first layer due to the exchange coupling force. Conditions for maintaining the magnetization of the second layer without re-reversing it are given by Formulas 18 and 19. This medium No. 2 satisfies Formulas 18 and 19:

$$H_{C1} > \frac{\sigma_w}{2M_{s1}t_1} \qquad \text{...Formula 18}$$

$$H_{C2} > \frac{\sigma_w}{2M_{s2}t_2} \qquad \text{...Formula 19}$$

$$H_{C2} + \frac{\sigma_w}{2M_{s2}t_2} < |Hini.| < H_{C1} - \frac{\sigma_w}{2M_{s1}t_1} \qquad \text{...Formula 20}$$

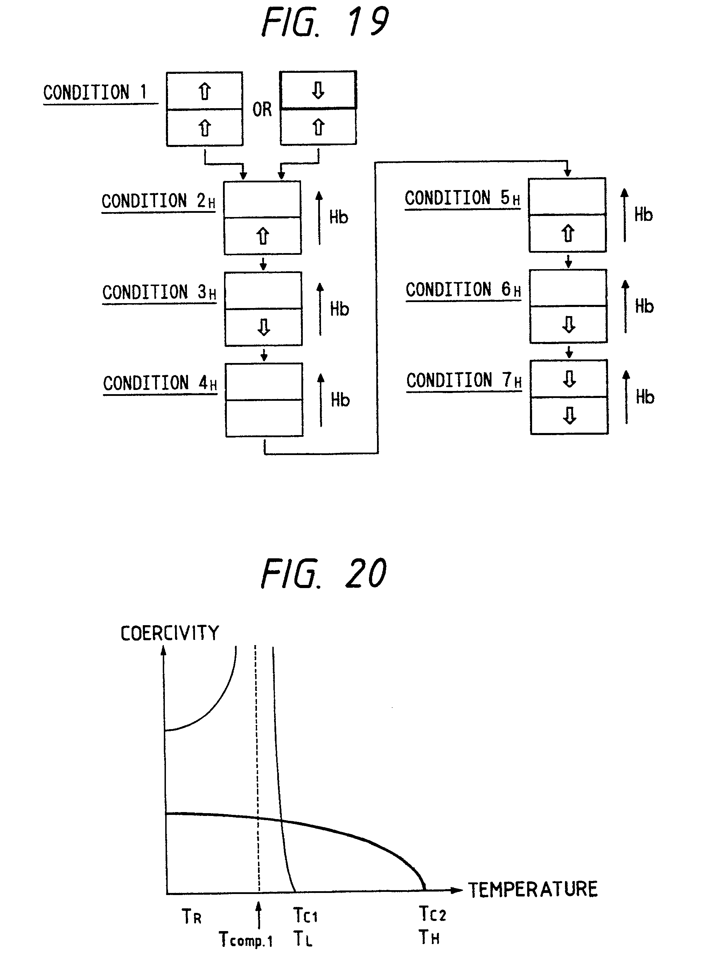

Magnetization of the second layer of the recording medium which satisfies the conditions given by Formulas 17 to 19 at the room temperature is aligned in, e.g., the "A direction" ⇑ ( ⇑ ) by Hini. satisfying a condition given by Formula 20 immediately before recording. In this case, the first layer is left in the recorded state (CONDITION 1 in Figs. 18 and 19).

This CONDITION 1 (a bold line represents a magnetic wall) is held immediately before recording. In this case, the bias field (Hb) is applied in a direction ↑.

A low-temperature cycle will be described below with reference to Fig. 18.

— Low-temperature Cycle —

A low-level laser beam is radiated on the medium in CONDITION 1 to increase the medium temperature to $T_L$. Since $T_L$ is almost equal to the Curie temperature $T_{C1}$ of the first layer, its magnetization disappears (CONDITION $2_L$).

When the irradiated portion falls outside the spot region of the laser beam in CONDITION $2_L$, the medium temperature begins to fall. When the medium temperature is decreased slightly below $T_{C1}$, the RE and TM spins ( ⇑ ) of the second layer influence those of the first layer due to the exchange coupling force. More specifically, a force acts to respectively align RE spins (↑) and TM spins ( ↓ ). As a result, magnetization ⇑ , i.e., ⇑ appears in the first layer (CONDITION $3_L$).

CONDITION $3_L$ is left unchanged even when the medium temperature is further decreased. As a result, the magnetization of the first layer is aligned in the "A direction" ⇑ regardless of the previously recorded bit, and a bit in the "A direction" ⇑ is formed.

A high-temperature cycle will be described below with reference to Fig. 19.

— High-temperature Cycle —

A high-level laser beam is radiated on the medium in CONDITION 1. As a result, when the medium temperature is increased to $T_L$, since $T_L$ is almost equal to the Curie temperature $T_{C1}$ of the first layer, magnetization of the first layer disappears. This condition corresponds to CONDITION $2_H$.

When beam radiation is further continued, the medium temperature is further increased. When the medium temperature slightly exceeds $T_{comp.2}$ of the second layer, the relationship between the strengths of RE and TM spins is reversed

$$( \Uparrow \rightarrow \Uparrow )$$

although their directions are left unchanged. For this reason, the magnetization of the entire alloy is reversed to the "non-A direction" ⇓ (CONDITION $3_H$).

However, since $H_{C2}$ is still large at this temperature, the magnetization of the second layer will not be reversed by ↑ Hb. When the temperature is further increased and reaches $T_H$, the temperature of the second layer becomes almost equal to the Curie temperature $T_{C2}$, and its magnetization disappears (CONDITION $4_H$).

When the irradiated portion falls outside the spot region of the laser beam in CONDITION $4_H$, the medium temperature begins to fall. When the medium temperature is decreased slightly below $T_{C2}$, magnetization appears in the second layer. In this case, magnetization $\Uparrow$ $(\downarrow\hat{\vdots})$ appears due to $\uparrow$ Hb. However, since the temperature is still higher than $T_{C1}$, no magnetization appears in the first layer. This condition corresponds to CONDITION $5_H$.

When the medium temperature is further decreased below $T_{comp.2}$, the relationship between the strengths of RE and TM spins is reversed

$$( \downarrow\hat{\vdots} - \downarrow\hat{\vdots} )$$

although their directions are left unchanged. As a result, the magnetization of the entire alloy is reversed from

$\Uparrow$ to the "non-A direction" $\downarrow$ (CONDITION $6_H$).

In CONDITION $6_H$, since the medium temperature is still higher than $T_{C1}$, the magnetization of the first layer is kept disappearing. In addition, since $H_{C2}$ at this temperature is large, the magnetization of the second layer will not be reversed by $\uparrow$ Hb.

When the temperature is further decreased slightly below $T_{C1}$, magnetization appears in the first layer. In this case, the exchange coupling force from the second layer acts to respectively align the RE spins ($\downarrow$) and

TM spins $(\hat{\vdots})$. Thus, magnetization $\downarrow\hat{\vdots}$, i.e., $\Uparrow$ appears in the first layer. This condition corresponds to CONDITION $7_H$.

The medium temperature is then decreased from the temperature in CONDITION $7_H$ to the room temperature. Since $H_{C1}$ at the room temperature is sufficiently large, the magnetization of the first layer will not be

reversed by $\uparrow$ Hb, and CONDITION $7_H$ can be maintained. Thus, a bit in the "non-A direction" $\downarrow$ is formed.

The principle of the over-write operation will be described in detail below using a specific medium No. 3 belonging to a recording medium of Class 3 (P type, Quadrant I, Type 3) shown in Table 1.

This medium No. 3 has a relation given by Formula 21:

$$T_R < T_{comp.1} < T_{C1} \approx T_L < T_{C2} \approx T_H \qquad ...\text{Formula 21}$$

Fig. 20 shows this relation as a graph.

A condition for reversing only the magnetization of the second layer by the initial field Hini. without reversing that of the first layer at the room temperature $T_R$ is given by Formula 22. This medium No. 3 satisfies Formula 22:

$$H_{C1} > H_{C2} + \frac{\sigma_w}{2M_{s1}t_1} + \frac{\sigma_w}{2M_{s2}t_2} \qquad ...\text{Formula 22}$$

In this case, a condition for Hini. is represented by Formula 25. When Hini. disappears, the reversed magnetization of the second layer is influenced by that of the first layer due to the exchange coupling force. Conditions for maintaining the magnetization of the second layer without re-reversing it are given by Formulas 23 and 24. This medium No. 3 satisfies Formulas 23 and 24:

$$H_{C1} > \frac{\sigma_w}{2M_{s1}t_1} \qquad ...\text{Formula 23}$$

$$H_{C2} > \frac{\sigma_w}{2M_{s2}t_2} \qquad ...\text{Formula 24}$$

$$H_{C2} + \frac{\sigma_w}{2M_{s2}t_2} < |Hini.| - \frac{\sigma_w}{2M_{s1}t_1} \qquad ...\text{Formula 25}$$

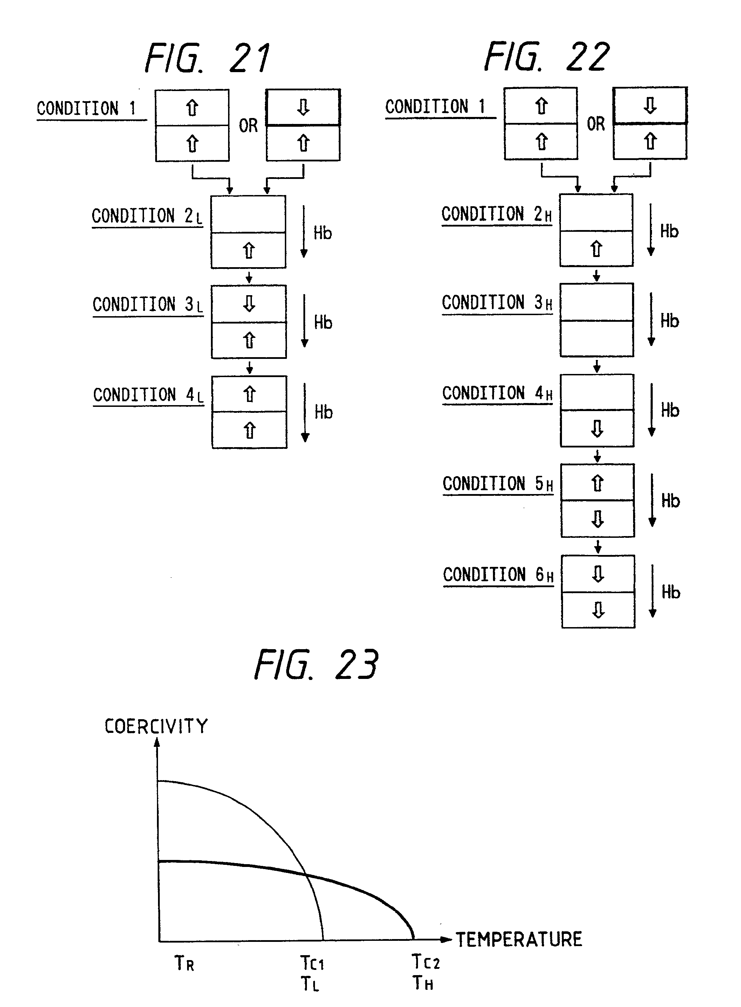

Magnetization of the second layer of the recording medium which satisfies the conditions given by Formulas 22 to 24 at the room temperature is aligned in, e.g., the "A direction" $\Uparrow$ $(\uparrow\vdots)$ by Hini. satisfying a condition given by Formula 25 immediately before recording. In this case, the first layer is left in the recorded state (CONDITION 1 in Figs. 21 and 22).

This CONDITION 1 (a bold line represents a magnetic wall) is held immediately before recording. In this case, the bias field (Hb) is applied in a direction $\uparrow$.

This CONDITION 1 is held immediately before recording. In this case, the bias field (Hb) is applied in a direction $\downarrow$.

A low-temperature cycle will be described below with reference to Fig. 21.

— Low-temperature Cycle —

A low-level laser beam is radiated on the medium in CONDITION 1 to increase the medium temperature to $T_L$. Since $T_L$ is almost equal to the Curie temperature $T_{C1}$ of the first layer, its magnetization disappears. However, since $H_{C2}$ of the second layer is still large at this temperature, the magnetization of the second layer will not be reversed by $\downarrow$ Hb (CONDITION $2_L$).

When the irradiated portion falls outside the spot region of the laser beam in CONDITION $2_L$, the medium temperature begins to fall. When the medium temperature is decreased slightly below $T_{C1}$, the RE and TM spins

$(\uparrow\!\!\downarrow)$ of the second layer influence those of the first layer due to the exchange coupling force. More specifically, a force acts to respectively align RE spins ($\uparrow$) and TM spins $(\downarrow)$. As a result, magnetization $\uparrow\!\!\downarrow$,

i.e., $\downarrow$ appears in the first layer. In this case, since the temperature is equal to or higher than $T_{comp.1}$, the TM spin is larger than the RE spin (CONDITION $3_L$).

When the medium temperature is decreased below $T_{comp.1}$, the relationship between the RE spin and TM spin of the first layer is reversed

$$(\uparrow\!\!\downarrow \rightarrow \uparrow\!\!\downarrow).$$

As a result, the magnetization of the first layer overcomes $\downarrow$ Hb, and is aligned in $\Uparrow$ (CONDITION $4_L$).

CONDITION $4_L$ is maintained even when the medium temperature is decreased to the room temperature. As a result, the magnetization of the first layer is aligned in the "A direction" $\Uparrow$ regardless of the previously recorded bit, and a bit in the "A direction" $\Uparrow$ is formed.

A high-temperature cycle will be described below with reference to Fig. 22.

— High-temperature Cycle —

A high-level beam is radiated on the medium in CONDITION 1. As a result, when the medium temperature is increased to $T_L$, since $T_L$ is almost equal to the Curie temperature $T_{C1}$ of the first layer, the magnetization of the first layer disappears (CONDITION $2_H$).

When the beam radiation further continues and the medium temperature reaches $T_H$, since $T_H$ is almost equal to $T_{C2}$ of the second layer, its magnetization also disappears (CONDITION $3_H$).

When the irradiated portion falls outside the spot region of the laser beam in CONDITION $3_H$, the medium temperature begins to fall. When the medium temperature is decreased slightly below $T_{C2}$, magnetization appears in the second layer. In this case, magnetization $\downarrow$ $(\downarrow\!\!\uparrow)$ appears due to $\downarrow$ Hb. However, since the temperature is still higher than $T_{C1}$, no magnetization appears in the first layer. This condition corresponds to CONDITION $4_H$.

When the medium temperature is further decreased slightly below $T_{C1}$, magnetization also appears in the first layer. In this case, the magnetization of the second layer influences that of the first layer due to the exchange coupling force. As a result, a force acts to respectively align RE spins ($\downarrow$) and TM spins $(\uparrow)$. In this case, since the medium temperature is equal to or higher than $T_{comp.1}$, the TM spins are larger than RE spins

$(\downarrow\!\!\uparrow)$. As a result, magnetization $\Uparrow$ appears in the second layer (CONDITION $5_H$).

When the medium temperature is further decreased from the temperature in CONDITION $5_H$ below $T_{comp.1}$, the relationship between the strengths of the TM and RE spins of the first layer is reversed

$$(\downarrow\!\!\uparrow \rightarrow \downarrow\!\!\uparrow).$$

For this reason, the direction of magnetization of the first layer is reversed to the "non-A direction" $\downarrow$ (CONDITION $6_H$).

The medium temperature is then decreased from the temperature in CONDITION $6_H$ to the room temperature. Since $H_{C1}$ at the room temperature is sufficiently large, the magnetization of the first layer is stably held.

Thus, a bit in the "non-A direction" $\downarrow$ is formed.

In the description of Classes 1 to 3, the low-temperature cycle includes a process for causing the coercivity of the first layer to almost disappear. However, the low-temperature cycle aims at forming a bit in CONDITION 1 free from a magnetic wall. Therefore, a bit free from a magnetic wall is left unchanged, and only a bit with a magnetic wall can be converted to a bit free from a magnetic wall. A bit with a magnetic wall is in a quasi-stable state, and is unstable as compared to a bit free from a magnetic wall, since magnetization of the second layer acts to align the direction of magnetization of the first layer in a stable state (no-magnetic wall state as a whole) via $\sigma_w$. For this reason, the coercivity of the first layer need not almost disappear, but need only be weakened. If the coercivity of the first layer need only be weakened, the medium temperature need not be increased to near $T_{C1}$.

The same applies to the following descriptions of Classes 4 to 9.

The principle of the over-write operation will be described in detail below using a specific medium No. 4 belonging to a recording medium of Class 4 (P type, Quadrant I, Type 4) shown in Table 1.

This medium No. 4 has a relation given by Formula 26:

$$T_R < T_{C1} \approx T_L < T_{C2} \approx T_H \qquad ...\text{Formula 26}$$

Fig. 23 shows this relation as a graph.

A condition for reversing only the magnetization of the second layer by the initial field Hini. without reversing that of the first layer at the room temperature $T_R$ is given by Formula 27. This medium No. 4 satisfies Formula 27:

$$H_{C1} > H_{C2} + \frac{\sigma_w}{2M_{s1}t_1} + \frac{\sigma_w}{2M_{s2}t_2} \qquad ...\text{Formula 27}$$

In this case, a condition for Hini. is represented by Formula 30. When Hini. disappears, the reversed magnetization of the second layer is influenced by that of the first layer due to the exchange coupling force. Conditions for maintaining the magnetization of the second layer without re-reversing it are given by Formulas 28 and 29. This medium No. 4 satisfies Formulas 28 and 29:

$$H_{C1} > \frac{\sigma_w}{2M_{s1}t_1} \qquad ...\text{Formula 28}$$

$$H_{C2} > \frac{\sigma_w}{2M_{s2}t_2} \qquad ...\text{Formula 29}$$

$$H_{C2} + \frac{\sigma_w}{2M_{s2}t_2} < |Hini.| < H_{C1} - \frac{\sigma_w}{2M_{s1}t_1} \qquad ...\text{Formula 30}$$

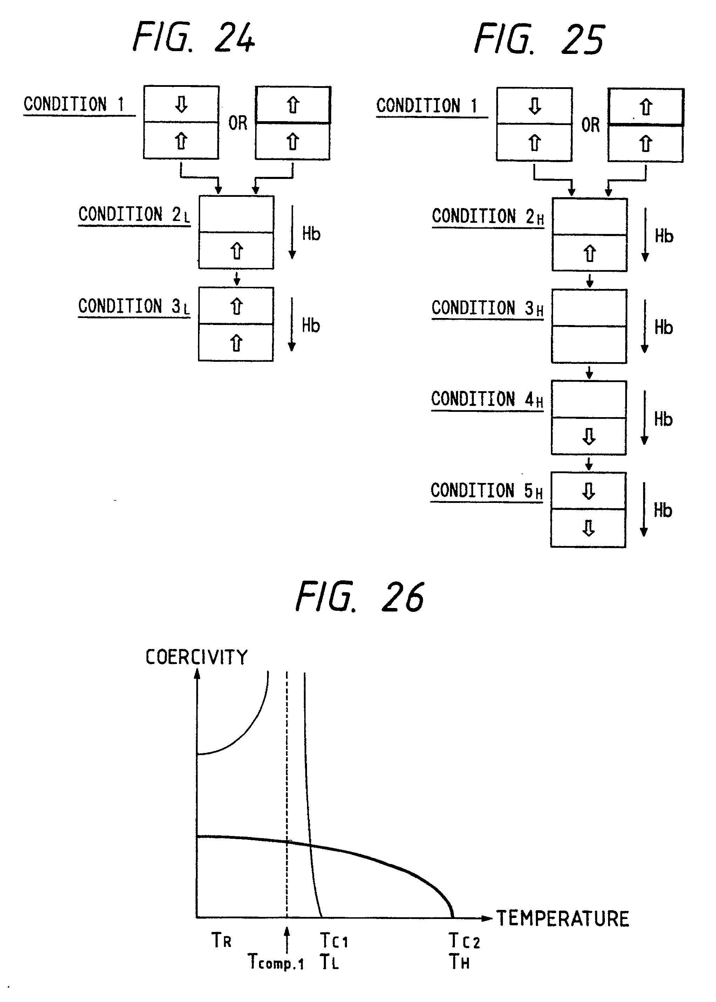

Magnetization of the second layer of the recording medium which satisfies the conditions given by Formulas 27 to 29 at the room temperature is aligned in, e.g., the "A direction" $\Uparrow$ $(\uparrow_{\downarrow})$ by Hini. satisfying a condition given by Formula 30 immediately before recording. In this case, the first layer is left in the recorded state (CONDITION 1 in Figs. 24 and 25).

This CONDITION 1 (a bold line represents a magnetic wall) is held immediately before recording. In this case, the bias field (Hb) is applied in a direction $\downarrow$.

A low-temperature cycle will be described below with reference to Fig. 24.

— Low-temperature Cycle —

A low-level laser beam is radiated of the medium in CONDITION 1 to increase the medium temperature to $T_L$. Since $T_L$ exceeds the Curie temperature $T_{C1}$ of the first layer, magnetization of the first layer disappears. In this state, since $H_{C2}$ is still large at this temperature, the magnetization $\Uparrow$ of the second layer will not be reversed by $\downarrow$ Hb. This condition corresponds to CONDITION $2_L$.

When the irradiated portion falls outside the spot region of the laser beam in CONDITION $2_L$, the medium temperature begins to fall. When the medium temperature is decreased slightly below $T_{C1}$, the RE and TM spins $(\uparrow_{\downarrow})$ of the second layer influence those of the first layer due to the exchange coupling force. More specifically, a force acts to respectively align RE spins ($\uparrow$) and TM spins ($\downarrow$). As a result, magnetization $\uparrow_{\downarrow}$, i.e., $\Uparrow$ overcomes $\downarrow$ Hb, and appears in the first layer. This condition corresponds to CONDITION $3_L$.

CONDITION $3_L$ is maintained even when the medium temperature is decreased to the room temperature. As a result, the magnetization of the first layer is aligned in the "A direction" $\Uparrow$ regardless of the previously recorded bit, and a bit in the "A direction" $\Uparrow$ is formed.

A high-temperature cycle will be described below with reference to Fig. 25.

— High-temperature Cycle —

A high-level beam is radiated on the medium in CONDITION 1. As a result, when the medium temperature is increased to $T_L$, since $T_L$ is almost equal to the Curie temperature $T_{C1}$ of the first layer, the magnetization of the first layer disappears. This condition corresponds to CONDITION $2_H$.

When the beam radiation further continues and the medium temperature reaches $T_H$, since the temperature $T_H$ of the second layer is almost equal to the Curie temperature $T_{C2}$, its magnetization also disappears. This condition corresponds to CONDITION $3_H$.

When the irradiated portion falls outside the spot region of the laser beam in CONDITION $3_H$, the medium temperature begins to fall. When the medium temperature is decreased slightly below $T_{C2}$, magnetization appears in the second layer. In this case, magnetization $\downarrow$ ($\downarrow\!\!\widehat{\,\,}$) appears due to $\downarrow$ Hb. However, since the temperature is still higher than $T_{C1}$, no magnetization appears in the first layer. This condition corresponds to CONDITION $4_H$.

When the medium temperature is further decreased slightly below $T_{C1}$, magnetization also appears in the first layer. In this case, the exchange coupling force from the second layer acts to respectively align RE spins ($\downarrow$) and TM spins ($\widehat{\,\,}$). For this reason, magnetization $\downarrow\!\!\widehat{\,\,}$ , i.e., $\Downarrow$ appears in the first layer. This condition corresponds to CONDITION $5_H$.

The medium temperature is then decreased from the temperature in CONDITION $5_H$ to the room temperature. Since $H_{C1}$ at the room temperature is sufficiently large, the magnetization of the first layer is stably held.

Thus, a bit in the "non-A direction" $\downarrow$ is formed.

The principle of the over-write operation will be described in detail below using a specific medium No. 5 belonging to a recording medium of Class 5 (A type, Quadrant II, Type 3) shown in Table 1.

This medium No. 5 has a relation given by Formula 31:

$$T_R < T_{comp.1} < T_{C1} \approx T_L < T_{C2} \approx T_H \qquad \text{...Formula 31}$$

Fig. 26 shows this relation as a graph.

A condition for reversing only the magnetization of the second layer by the initial field Hini. without reversing that of the first layer at the room temperature $T_R$ is given by Formula 32. This medium No. 5 satisfies Formula 32:

$$H_{C1} > H_{C2} + \left| \frac{\sigma_w}{2M_{S1}t_1} - \frac{\sigma_w}{2M_{S2}t_2} \right| \qquad \text{...Formula 32}$$

In this case, a condition for Hini. is represented by Formula 35. When Hini. disappears, the reversed magnetization of the second layer is influenced by that of the first layer due to the exchange coupling force. Conditions for maintaining the magnetization of the second layer without re-reversing it are given by Formulas 33 and 34. This medium No. 5 satisfies Formulas 33 and 34:

$$H_{C1} > \frac{\sigma_w}{2M_{s1}t_1} \qquad \text{...Formula 33}$$

$$H_{C2} > \frac{\sigma_w}{2M_{s2}t_2} \qquad \text{...Formula 34}$$

$$H_{C2} + \frac{\sigma_w}{2M_{s2}t_2} < |Hini.| < H_{C1} + \frac{\sigma_w}{2M_{s1}t_1} \qquad \text{...Formula 35}$$

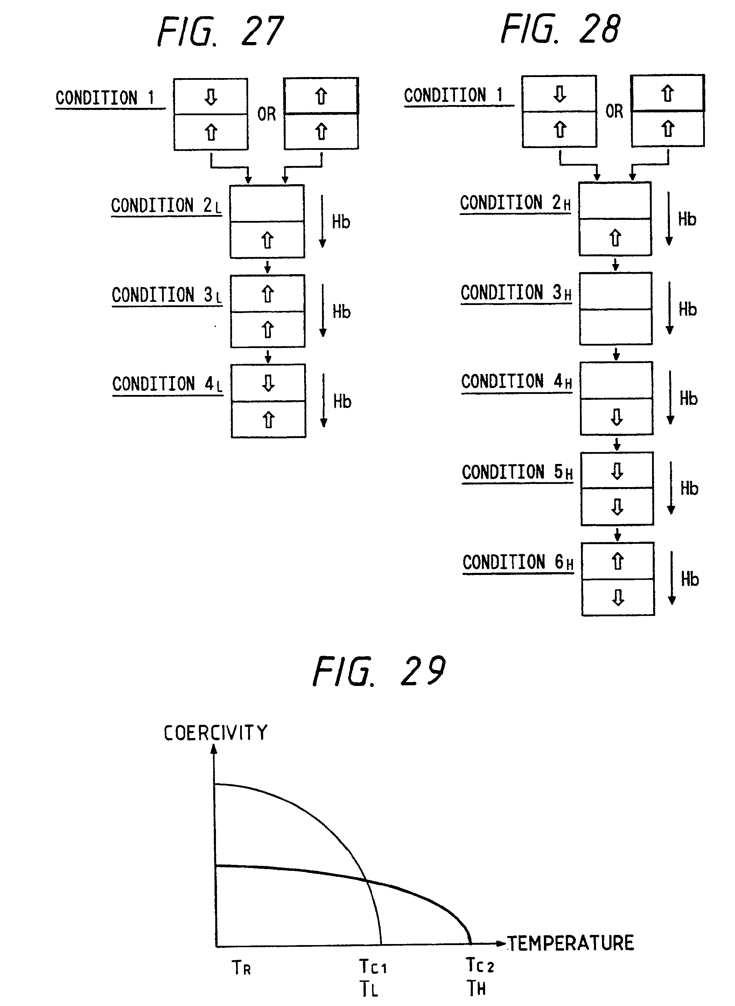

Magnetization of the second layer of the recording medium which satisfies the conditions given by Formulas 32 to 34 at the room temperature is aligned in, e.g., the "A direction" $\Uparrow$ ($\downarrow\!\!\widehat{\,\,}$) by Hini. satisfying a condition given by Formula 35 immediately before recording. In this case, the first layer is left in the recorded state (CONDITION 1 in Figs. 27 and 28).

This CONDITION 1 (a bold line represents a magnetic wall) is held immediately before recording. In this case, the bias field (Hb) is applied in a direction $\downarrow$.

A low-temperature cycle will be described below with reference to Fig. 27.

— Low-temperature Cycle —

A low-level laser beam is radiated of the medium in CONDITION 1 to increase the medium temperature to $T_L$. Since $T_L$ is almost equal to the Curie temperature $T_{C1}$ of the first layer, magnetization of the first layer disappears. However, since $H_{C2}$ of the second layer is still large at this temperature, the magnetization of the second layer will not be reversed by ↓ Hb (CONDITION $2_L$).

When the beam radiation is ended in CONDITION $2_L$, the medium temperature begins to fall. When the medium temperature is decreased slightly below $T_{C1}$, the RE and TM spins $(\downarrow \hat{\uparrow})$ of the second layer influence those of the first layer due to the exchange coupling force. More specifically, a force acts to respectively align RE spins (↓) and TM spins $(\hat{\uparrow})$. As a result, magnetization $\downarrow \hat{\uparrow}$, i.e., ⇑ overcomes ↓ Hb, and appears in the first layer. In this case, since the temperature is equal to or higher than $T_{comp.1}$, the TM spin is larger than the RE spin (CONDITION $3_L$).

When the medium temperature is further decreased below $T_{comp.1}$, the relationship between the RE spin and TM spin of the first layer is reversed

$$( \downarrow \hat{\uparrow} \rightarrow \downarrow \hat{\uparrow} ).$$

As a result, the magnetization of the first layer is aligned in ⇓ (condition $4_L$).

condition $4_L$ is maintained even when the medium temperature is decreased to the room temperature. As a result, the magnetization of the first layer is aligned in the "non-A direction" ⇓ regardless of the previously recorded bit, and a bit in the "non-A direction" ⇓ is formed.

A high-temperature cycle will be described below with reference to Fig. 28.

— High-temperature cycle —

A high-level beam is radiated on the medium in CONDITION 1. As a result, when the medium temperature is increased to $T_L$, since $T_L$ is almost equal to the curie temperature $T_{C1}$ of the first layer, the magnetization of the first layer disappears. This condition corresponds to CONDITION $2_H$.

When the beam radiation further continues and the medium temperature reaches $T_H$, since $T_H$ is almost equal to $T_{C2}$, the magnetization of the second layer also disappears (CONDITION $3_H$).

When the irradiated portion falls outside the spot region of the laser beam in CONDITION $3_H$, the medium temperature begins to fall. When the medium temperature is decreased slightly below $T_{C2}$, magnetization appears in the second layer. In this case, magnetization ⇓ $(\uparrow \downarrow)$ appears due to ↓ Hb. However, since the temperature is still higher than $T_{C1}$, no magnetization appears in the first layer. This condition corresponds to CONDITION $4_H$.

When the medium temperature is further decreased slightly below $T_{C1}$, magnetization also appears in the first layer. In this case, the magnetization of the second layer influences that of the first layer due to the exchange coupling force. As a result, a force acts to respectively align RE spins (↑) and TM spins $(\downarrow)$. In this case, since the medium temperature is equal to or higher than $T_{comp.1}$, the TM spins are larger than RE spins $(\uparrow \downarrow)$. As a result, magnetization ⇓ appears in the first layer (CONDITION $5_H$).

When the medium temperature is further decreased from the temperature in CONDITION $5_H$ below $T_{comp.1}$, the relationship between the strengths of the TM and RE spins of the first layer is reversed

$$( \uparrow \downarrow \rightarrow \uparrow \downarrow ).$$

For this reason, the direction of magnetization of the first layer is reversed to the "A direction" ⇑ (CONDITION $6_H$).

The medium temperature is then decreased from the temperature in CONDITION $6_H$ to the room temperature. Since $H_{C1}$ at the room temperature is sufficiently large, the magnetization of the first layer is stably held. Thus, a bit in the "A direction" ⇑ is formed.

The principle of the over-write operation will be described in detail below using a specific medium No. 6 belonging to a recording medium of Class 6 (A type, Quadrant II, Type 4) shown in Table 1.

This medium No. 6 has a relation given by Formula 36:

$$T_R < T_{C1} \approx T_L < T_{C2} \approx T_H \qquad \text{...Formula 36}$$

Fig. 29 shows this relation as a graph.

A condition for reversing only the magnetization of the second layer by the initial field Hini. without reversing that of the first layer at the room temperature $T_R$ is given by Formula 37. This medium No. 6 satisfies Formula 37:

$$H_{C1} > H_{C2} + \left| \frac{\sigma_w}{2M_{S1}t_1} - \frac{\sigma_w}{2M_{S2}t_2} \right| \qquad \text{...Formula 37}$$

In this case, a condition for Hini. is represented by Formula 40. When Hini. disappears, the reversed magnetization of the second layer is influenced by that of the first layer due to the exchange coupling force. Conditions for maintaining the magnetization of the second layer without re-reversing it are given by Formulas 38 and 39. This medium No. 6 satisfies Formulas 38 and 39:

$$H_{C1} > \frac{\sigma_w}{2M_{s1}t_1} \qquad \text{...Formula 38}$$

$$H_{C2} > \frac{\sigma_w}{2M_{s2}t_2} \qquad \text{...Formula 39}$$

$$H_{C2} + \frac{\sigma_w}{2M_{s2}t_2} < |Hini.| < H_{C1} + \frac{\sigma_w}{2M_{s1}t_1} \qquad \text{...Formula 40}$$

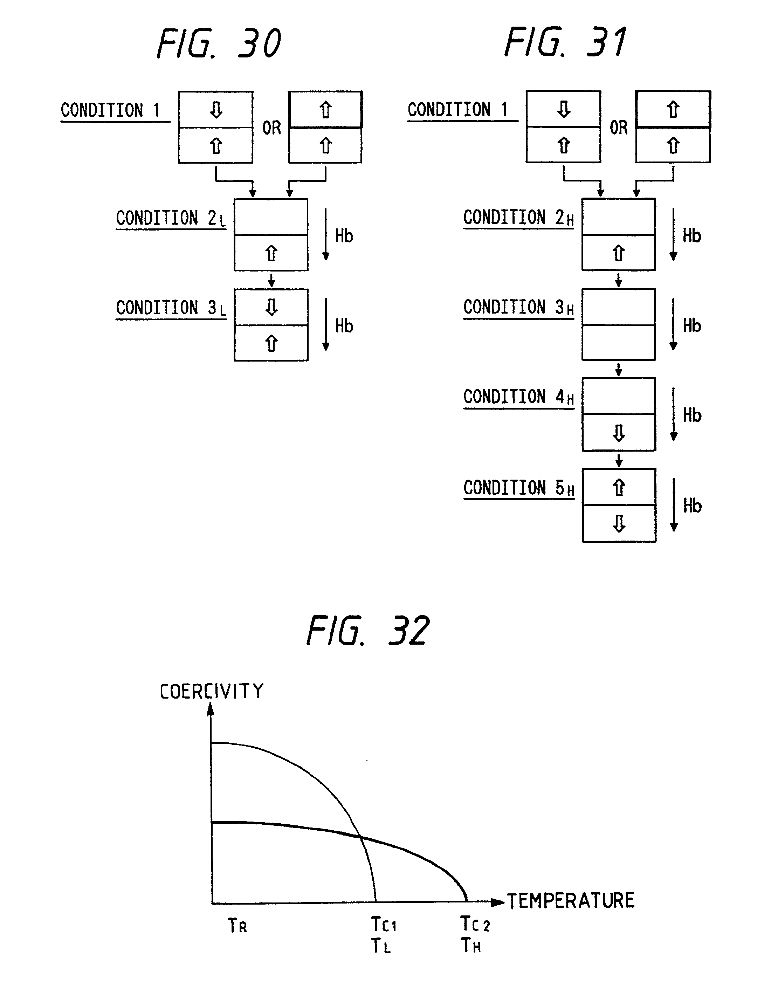

Magnetization of the second layer of the recording medium which satisfies the conditions given by Formulas 37 to 39 at the room temperature is aligned in, e.g., the "A direction" ⇑ ( $\downarrow$ ) by Hini. satisfying a condition given by Formula 40 immediately before recording. In this case, the first layer is left in the recorded state (CONDITION 1 in Figs. 30 and 31).

This CONDITION 1 (a bold line represents a magnetic wall) is held immediately before recording. In this case, the bias field (Hb) is applied in a direction $\downarrow$.

A low-temperature cycle will be described below with reference to Fig. 30.

— Low-temperature Cycle —

A low-level laser beam is radiated on the medium in CONDITION 1 to increase the medium temperature to $T_L$. Since $T_L$ is almost equal to the Curie temperature $T_{C1}$ of the first layer, magnetization of the first layer disappears. In this state, since $H_{C2}$ of the second layer is still large at this temperature, the magnetization of the second layer will not be reversed by $\downarrow$ Hb. This condition corresponds to CONDITION $2_L$.

When the irradiated portion falls outside the spot region of the laser beam in CONDITION $2_L$, the medium temperature begins to fall. When the medium temperature is decreased slightly below $T_{C1}$, the RE and TM spins

( $\downarrow$ ) of the second layer influence those of the first layer due to the exchange coupling force. More specifically, a force acts to respectively align RE spins ($\downarrow$) and TM spins ( $\uparrow$ ) . As a result, magnetization $\downarrow$ ,

i.e., ⇃ appears in the first layer. This condition corresponds to CONDITION $3_L$.

CONDITION $3_L$ is maintained even when the medium temperature is decreased to the room temperature.

As a result, the magnetization of the first layer is aligned in the "non-A direction" ⇃ regardless of the previously recorded bit, and a bit in the "non-A direction" ⇃ is formed.

A high-temperature cycle will be described below with reference to Fig. 31.

— High-temperature Cycle —

A high-level beam is radiated on the medium. As a result, when the medium temperature is increased to $T_L$, since $T_L$ is almost equal to the Curie temperature $T_{C1}$ of the first layer, the magnetization of the first layer disappears. This condition corresponds to CONDITION $2_H$.

When the beam radiation further continues and the medium temperature reaches $T_H$, since the temperature $T_H$ of the second layer is almost equal to $T_{C2}$, the magnetization of the second layer also disappears. This condition corresponds to CONDITION $3_H$.

When the irradiated portion falls outside the spot region of the laser beam in CONDITION $3_H$, the medium temperature begins to fall. When the medium temperature is decreased slightly below $T_{C2}$, magnetization appears in the second layer. In this case, magnetization $\Downarrow$ ($\uparrow\!\!\!\downarrow$) appears due to $\downarrow$ Hb. However, since the temperature is still higher than $T_{C1}$, no magnetization appears in the first layer. This condition corresponds to CONDITION $4_H$.

When the medium temperature is further decreased slightly below $T_{C1}$, magnetization also appears in the first layer. In this case, the exchange coupling force from the second layer acts to respectively align RE spins ($\uparrow$) and TM spins ($\downarrow$). For this reason, magnetization $\uparrow\!\!\!\downarrow$ ', i.e., $\Uparrow$ overcomes $\downarrow$ Hb, and appears in the first layer. This condition corresponds to CONDITION $5_H$.

The medium temperature is then decreased from the temperature in CONDITION $5_H$ to the room temperature. Since $H_{C1}$ at the room temperature is sufficiently large, the magnetization of the first layer is stably held. Thus, a bit in the "A direction" $\Uparrow$ is formed.

The principle of the over-write operation will be described in detail below using a specific medium No. 7 belonging to a recording medium of Class 7 (P type, Quadrant III, Type 4) shown in Table 1.

This medium No. 7 has a relation given by Formula 41:

$$T_R < T_{C1} \approx T_L < T_{C2} \approx T_H \qquad \text{...Formula 41}$$

Fig. 32 shows this relation as a graph.

A condition for reversing only the magnetization of the second layer by the initial field Hini. without reversing that of the first layer at the room temperature $T_R$ is given by Formula 42. This medium No. 7 satisfies Formula 42:

$$H_{C1} > H_{C2} + \frac{\sigma_w}{2M_{s1}t_1} + \frac{\sigma_w}{2M_{s2}t_2} \qquad \text{...Formula 42}$$

In this case, a condition for Hini. is represented by Formula 45. When Hini. disappears, the reversed magnetization of the second layer is influenced by that of the first layer due to the exchange coupling force. Conditions for maintaining the magnetization of the second layer without re-reversing it are given by Formulas 43 and 44. This medium No. 7 satisfies Formulas 43 and 44:

$$H_{C1} > \frac{\sigma_w}{2M_{s1}t_1} \qquad \text{...Formula 43}$$

$$H_{C2} > \frac{\sigma_w}{2M_{s2}t_2} \qquad \text{...Formula 44}$$

$$H_{C2} + \frac{\sigma_w}{2M_{s2}t_2} < |Hini.| < H_{C1} - \frac{\sigma_w}{2M_{s1}t_1} \qquad \text{...Formula 45}$$

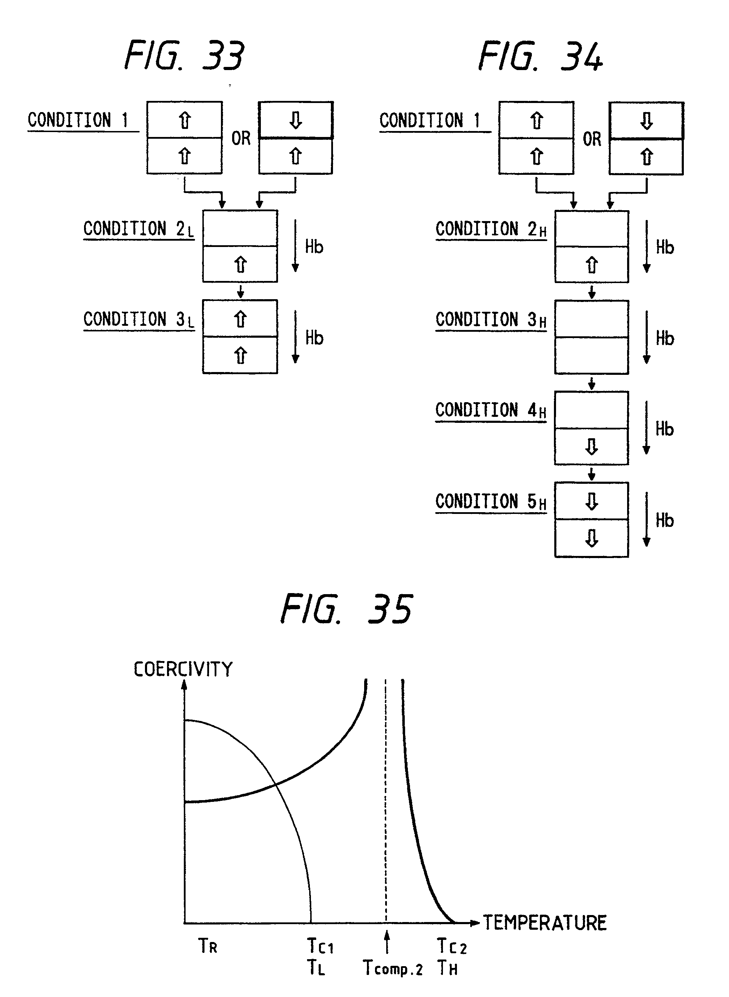

Magnetization of the second layer of the recording medium which satisfies the conditions given by Formulas 42 to 44 at the room temperature is aligned in, e.g., the "A direction" $\Uparrow$ ($\downarrow\!\!\!\uparrow$) by Hini. satisfying a condition given by Formula 45 immediately before recording. In this case, the first layer is left in the recorded state (CONDITION 1 in Figs. 33 and 34).

This CONDITION 1 (a bold line represents a magnetic wall) is held immediately before recording. In this case, the bias field (Hb) is applied in a direction $\downarrow$.

A low-temperature cycle will be described below with reference to Fig. 33.

— Low-temperature Cycle —

A low-level laser beam is radiated on the medium in CONDITION 1 to increase the medium temperature to $T_L$. Since $T_L$ is almost equal to the Curie temperature $T_{C1}$ of the first layer, magnetization of the first layer disappears. In this state, since $H_{C2}$ is still large at this temperature, the magnetization of the second layer will not be reversed by $\downarrow$ Hb. This condition corresponds to CONDITION $2_L$.

When the irradiated portion falls outside the spot region of the laser beam in CONDITION $2_L$, the medium temperature begins to fall. When the medium temperature is decreased slightly below $T_{C1}$ the RE and TM spins

$(\downarrow\overset{\uparrow}{:})$ of the second layer influence those of the first layer due to the exchange coupling force. More specifically, a force acts to respectively align RE spins ($\downarrow$) and TM spins $(\overset{\uparrow}{:})$. As a result, magnetization $\overset{\uparrow}{\downarrow}$, i.e., $\Uparrow$ overcomes $\downarrow$ Hb, and appears in the first layer. This condition corresponds to CONDITION $3_L$.

CONDITION $3_L$ is maintained even when the medium temperature is decreased to the room temperature. As a result, the magnetization of the first layer is aligned in the "A direction" $\Uparrow$ regardless of the previously recorded bit, and a bit in the "A direction" $\Uparrow$ is formed.

A high-temperature cycle will be described below with reference to Fig. 34.

— High-temperature Cycle —

A high-level beam is radiated on the medium in CONDITION 1. As a result, when the medium temperature is increased to $T_L$, since $T_L$ is almost equal to the Curie temperature $T_{C1}$ of the first layer, the magnetization of the first layer disappears (CONDITION $2_H$).

When the beam radiation further continues and the medium temperature reaches $T_H$, since the temperature $T_H$ of the second layer is almost equal to the Curie temperature $T_{C2}$, the magnetization of the second layer also disappears. This condition corresponds to CONDITION $3_H$.

When the irradiated portion falls outside the spot region of the laser beam in CONDITION $3_H$, the medium temperature begins to fall. When the medium temperature is decreased slightly below $T_{C2}$, magnetization appears in the second layer. In this case, magnetization $\overset{\downarrow}{\phantom{x}}$ $(\uparrow\overset{:}{\downarrow})$ appears due to $\downarrow$ Hb. However, since the temperature is still higher than $T_{C1}$, no magnetization appears in the first layer. This condition corresponds to CONDITION $4_H$.

When the medium temperature is further decreased slightly below $T_{C1}$, magnetization also appears in the first layer. In this case, the exchange coupling force from the second layer $(\uparrow\overset{:}{\downarrow})$ acts to respectively align RE spins ($\uparrow$) and TM spins $(\overset{:}{\downarrow})$. For this reason, magnetization $\uparrow\overset{:}{\downarrow}$, i.e., $\downarrow$ appears in the first layer. This condition corresponds to CONDITION $5_H$.

The medium temperature is then decreased from the temperature in CONDITION $5_H$ to the room temperature. Since $H_{C1}$ at the room temperature is sufficiently large, the magnetization of the first layer is stably held.

Thus, a bit in the "non-A direction" $\Updownarrow$ is formed.

The principle of the over-write operation will be described in detail below using a specific medium No. 8 belonging to a recording medium of Class 8 (P type, Quadrant IV, Type 2) shown in Table 1.

This medium No. 8 has a relation given by Formula 46:

$$T_R < T_{C1} \approx T_L \approx T_{comp.2} < T_{C2} \approx T_H \qquad \text{...Formula 46}$$

Fig. 35 shows this relation as a graph.

A condition for reversing only the magnetization of the second layer by the initial field Hini. without reversing that of the first layer at the room temperature $T_R$ is given by Formula 47. This medium No. 8 satisfies Formula 47:

$$H_{C1} > H_{C2} + \left| \frac{\sigma_w}{2M_{S1}t_1} - \frac{\sigma_w}{2M_{S2}t_2} \right| \qquad \text{...Formula 47}$$

In this case, a condition for Hini. is represented by Formula 50. When Hini. disappears, the reversed magnetization of the second layer is influenced by that of the first layer due to the exchange coupling force. Conditions for maintaining the magnetization of the second layer without re-reversing it are given by Formulas 48 and 49. This medium No. 8 satisfies Formulas 48 and 49:

$$H_{C1} > \frac{\sigma_w}{2M_{S1}t_1} \qquad \text{...Formula 48}$$

$$H_{C2} > \frac{\sigma_w}{2M_{S2}t_2} \qquad \text{...Formula 49}$$

$$H_{C2} + \frac{\sigma_w}{2M_{s2}t_2} < |Hini.| < H_{C1} + \frac{\sigma_w}{2M_{s1}t_1} \qquad ...\text{Formula 50}$$

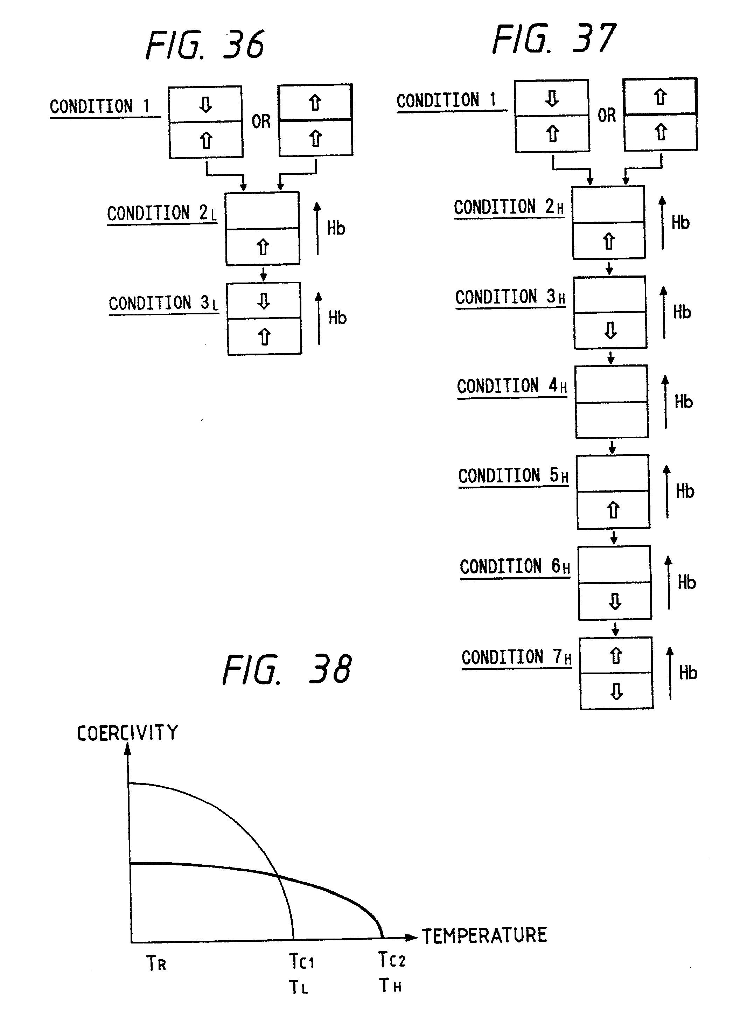

Magnetization of the second layer of the recording medium which satisfies the conditions given by Formulas 47 to 49 at the room temperature is aligned in, e.g., the "A direction" ⇑ ( ↑↓ ) by Hini. satisfying a condition given by Formula 50 immediately before recording. In this case, the first layer is left in the recorded state (CONDITION 1 in Figs. 36 and 37).

This CONDITION 1 (a bold line represents a magnetic wall) is held immediately before recording. In this case, the bias field (Hb) is applied in a direction ↑.

A low-temperature cycle will be described below with reference to Fig. 36.

— Low-temperature Cycle —

A low-level laser beam is radiated or the medium in CONDITION 1 to increase the medium temperature to $T_L$. Since $T_L$ is almost equal to the Curie temperature $T_{C1}$ of the first layer, magnetization of the first layer disappears. However, since $H_{C2}$ of the second layer is still large at this temperature, the magnetization of the second layer will not be reversed by ↑ Hb (CONDITION $2_L$).

When the irradiated portion falls outside the spot region of the laser beam in CONDITION $2_L$, the medium temperature begins to fall. When the medium temperature is decreased slightly below $T_{C1}$, the RE and TM spins

( ↑↓ )

of the second layer influence those of the first layer due to the exchange coupling force. More specifically, a force acts to respectively align RE spins (↑) and TM spins ( ↓ ) . As a result, magnetization ↑↓ ,

i.e., ↓ overcomes ↑ Hb, and appears in the first layer. This condition corresponds to CONDITION $3_L$.

CONDITION $3_L$ is maintained even when the medium temperature is decreased to the room temperature. As a result, the magnetization of the first layer is aligned in the "non-A direction" ⇓ regardless of the previously recorded bit, and a bit in the "non-A direction" ⇓ is formed in the first layer.

A high-temperature cycle will be described below with reference to Fig. 37.

— High-temperature Cycle —

A high-level laser beam is radiated on the medium in CONDITION 1. As a result, when the medium temperature is increased to $T_L$, since $T_L$ is almost equal to the Curie temperature $T_{C1}$ of the first layer, magnetization of the first layer disappears (CONDITION $2_H$).

When beam radiation is further continued, and the medium temperature slightly exceeds $T_{comp.2}$, the relationship between the strengths of RE and TM spins is reversed

( ↑↓ → ↑↓ )

although the directions of the RE spin (↑) and the TM spin ( ↓ ) are left unchanged. As a result, the magnetization of the second layer is reversed to the "non-A direction" ⇓ . This condition corresponds to CONDITION $3_H$.

However, since $H_{C2}$ is still large at this temperature, the magnetization ⇓ of the second layer will not be reversed by ↑ Hb. Assume that the beam radiation further continues, and the temp'erature is further increased and reaches $T_H$. Since $T_H$ is almost equal to $T_{C2}$, the magnetization of the second layer also disappears (CONDITION $4_H$).

When the irradiated portion falls outside the spot region of the laser beam in CONDITION $4_H$, the medium temperature begins to fall. When the medium temperature is decreased slightly below $T_{C2}$, magnetization appears in the second layer. In this case, magnetization ⇑ ( ↓↑ ) appears due to ↑ Hb. However, since the temperature is still higher than $T_{C1}$, no magnetization appears in the first layer. This condition corresponds to CONDITION 5$_H$.

When the medium temperature is further decreased slightly below T$_{comp.2}$, the relationship between the strengths of RE and TM spins is reversed

$$( \downarrow \overset{\wedge}{\vdots} - \downarrow \overset{\wedge}{\vdots} )$$

although the directions of the RE spin ($\downarrow$) and the TM spin $( \overset{\wedge}{\vdots} )$ are left unchanged. As a result, the magnetization of the second layer is reversed to the "non-A direction" $\overset{\textbf{I}}{}$. In this condition, since H$_{C2}$ has already been considerably large, the magnetization $\overset{\textbf{I}}{}$ of the second layer will not be reversed by ↑ Hb. Since the temperature is still higher than T$_{C1}$, no magnetization appears in the first layer yet. This condition corresponds to CONDITION 6$_H$.

When the temperature is further decreased slightly below T$_{C1}$, magnetization also appears in the first layer. In this case, the magnetization $( \downarrow \overset{\wedge}{\vdots} )$ of the second layer influences the first layer due to the exchange coupling force. More specifically, a force acts to respectively align the RE spins ($\downarrow$) and TM spins $( \overset{\wedge}{\vdots} )$. As a result, magnetization $\downarrow \overset{\wedge}{\vdots}$ (⇈) appears in the first layer (CONDITION 7$_H$).

The medium temperature is then decreased from the temperature in CONDITION 7$_H$ to the room temperature. Since H$_{C1}$ at the room temperature is sufficiently large, the magnetization of the first layer is stably held. Thus, a bit in the "A direction" ⇈ is formed.

The principle of the over-write operation will be described in detail below using a specific medium No. 9 belonging to a recording medium of Class 9 (A type, Quadrant IV, Type 4) shown in Table 1.

This medium No. 9 has a relation given by Formula 51:

$$T_R < T_{C1} \approx T_L < T_{C2} \approx T_H \qquad \text{...Formula 51}$$

Fig. 38 shows this relation as a graph.

A condition for reversing only the magnetization of the second layer by the initial field Hini. without reversing that of the first layer at the room temperature T$_R$ is given by Formula 52. This medium No. 9 satisfies Formula 52:

$$H_{C1} > H_{C2} + \left| \frac{\sigma_w}{2M_{S1}t_1} - \frac{\sigma_w}{2M_{S2}t_2} \right| \qquad \text{...Formula 52}$$

In this case, a condition for Hini. is represented by Formula 55. When Hini. disappears, the reversed magnetization of the second layer is influenced by that of the first layer due to the exchange coupling force. Conditions for maintaining the magnetization of the second layer without re-reversing it are given by Formulas 53 and 54. This medium No. 9 satisfies Formulas 53 and 54:

$$H_{C1} > \frac{\sigma_w}{2M_{S1}t_1} \qquad \text{...Formula 53}$$

$$H_{C2} > \frac{\sigma_w}{2M_{S2}t_2} \qquad \text{...Formula 54}$$

$$H_{C2} + \frac{\sigma_w}{2M_{S2}t_2} < |Hini.| < H_{C1} + \frac{\sigma_w}{2M_{S1}t_1} \qquad \text{...Formula 55}$$

Magnetization of the second layer of the recording medium which satisfies the conditions given by Formulas 52 to 54 at the room temperature is aligned in, e.g., the "A direction" ⇈

21

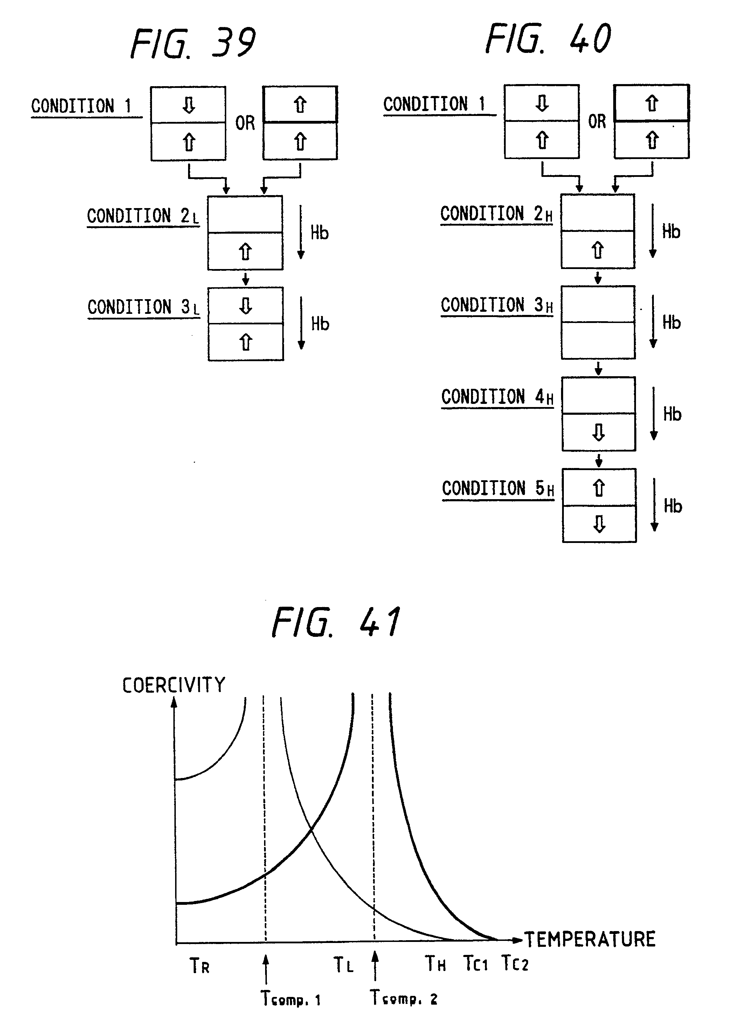

by Hini. satisfying a condition given by Formula 55 immediately before recording. In this case, the first layer is left in the recorded state (CONDITION 1 in Figs. 39 and 40).

This CONDITION 1 (a bold line represents a magnetic wall) is held immediately before recording. In this case, the bias field (Hb) is applied in a direction $\downarrow$.

A low-temperature cycle will be described below with reference to Fig. 39.

— Low-temperature Cycle —

A low-level laser beam is radiated on the medium in CONDITION 1 to increase the medium temperature to $T_L$. Since $T_L$ is almost equal to the Curie temperature $T_{C1}$ of the first layer, magnetization of the first layer disappears. In this state, since $H_{C2}$ is still large at this temperature, the magnetization $\Uparrow$ of the second layer will not be reversed by $\downarrow$ Hb. This condition corresponds to CONDITION $2_L$.

When the irradiated portion falls outside the spot region of the laser beam in CONDITION $2_L$, the medium temperature begins to fall. When the medium temperature is slightly decreased below $T_{C1}$, the RE and TM spins

$(\uparrow\!\!\!\downarrow)$ of the second layer influence those of the first layer due to the exchange coupling force. More specifically, the exchange coupling acts to respectively align RE spins ($\uparrow$) and TM spins $(\downarrow)$. As a result, magnetization $\uparrow\!\!\!\downarrow$, i.e., $\downarrow$ appears in the first layer. This condition corresponds to CONDITION $3_L$.

CONDITION $3_L$ is maintained even when the medium temperature is decreased to the room temperature.

As a result, the magnetization of the first layer is aligned in the "non-A direction" $\downarrow$ regardless of the previously recorded bit, and a bit in the "non-A direction" $\downarrow$ is formed in the first layer.

A high-temperature cycle will be described below with reference to Fig. 40.

— High-temperature Cycle —

A high-level beam is radiated on the medium in CONDITION 1. As a result, when the medium temperature is increased to $T_L$, since $T_L$ is almost equal to the Curie temperature $T_{C1}$ of the first layer, the magnetization of the first layer disappears (CONDITION $2_H$).

When the beam radiation further continues and the medium temperature reaches $T_H$, since the temperature $T_H$ of the medium, in particular, of the second layer, is almost equal to $T_{C2}$, the magnetization of the second layer also disappears. This condition corresponds to CONDITION $3_H$.

When the irradiated portion falls outside the spot region of the laser beam in CONDITION $3_H$, the medium temperature begins to fall. When the medium temperature is decreased slightly below $T_{C2}$, magnetization appears in the second layer. In this case, magnetization $\downarrow$ $(\downarrow\!\!\!\uparrow)$ appears due to $\downarrow$ Hb. However, since this temperature is still higher than $T_{C1}$, no magnetization appears in the first layer. This condition corresponds to CONDITION $4_H$.

When the medium temperature is further decreased slightly below $T_{C1}$, magnetization appears in the first layer. In this case, the exchange coupling force from the second layer $(\downarrow\!\!\!\uparrow)$ acts to respectively align RE spins ($\downarrow$) and TM spins $(\uparrow)$. For this reason, magnetization $\downarrow\!\!\!\uparrow$, i.e., $\Uparrow$ overcomes $\downarrow$ Hb, and appears in the first layer. This condition corresponds to CONDITION $5_H$.

The medium temperature is then decreased from the temperature in CONDITION $5_H$ to the room temperature. Since $H_{C1}$ at the room temperature is sufficiently large, the magnetization of the first layer is stably held. Thus, a bit in the "A direction" $\Uparrow$ is formed.

The principle of an over-write operation will be described in detail below using a medium No. 1-2 belonging to a recording medium of Class 1 (P type, Quadrant I, Type 1) shown in Table 1.

The medium No. 1-2 satisfies Formula 11:

$$T_R < T_{comp.1} < T_L < T_H \lesssim T_{C1} \lesssim T_{C2} \qquad ...\text{Formula 11}$$

and also satisfies Formula 11-2:

$$T_{comp.1} < T_{C1} \qquad ...\text{Formula 11-2}$$

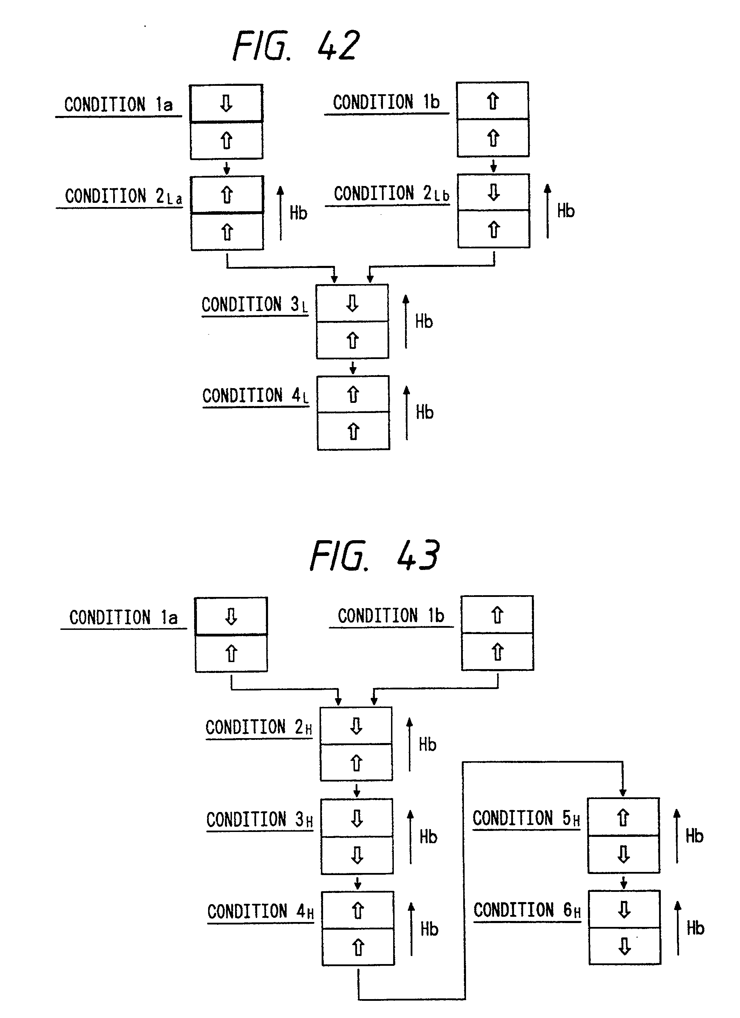

For the sake of simplicity, a medium having a relation of $T_H < T_{C1} < T_{C2}$ will be described below. The temperature $T_{comp.2}$ may be higher than, equal to, or lower than $T_L$. For the sake of simplicity, $T_{comp.2}$ is set to satisfy $T_L < T_{comp.2}$ in the following description. Fig. 41 shows the above-mentioned relationship as a graph. Note that thin curves represent characteristics of the first layer, and bold curves represent those of the second layer.

A condition that reverses the direction of magnetization of the second layer without reversing that of the first layer (recording layer) by the initial field Hini. at the room temperature $T_R$ is represented by Formula 12. This medium No. 1-2 satisfies Formula 12:

$$H_{C1} > H_{C2} + \frac{\sigma_w}{2M_{s1}t_1} + \frac{\sigma_w}{2M_{s2}t_2} \qquad \text{...Formula 12}$$

where

$H_{C1}$:  coercivity of first layer
$H_{C2}$:  coercivity of second layer
$M_{s1}$:  saturation magnetization of first layer
$M_{s2}$:  saturation magnetization of second layer
$t_1$ :  film thickness of first layer
$t_2$ :  film thickness of second layer
$\sigma_w$ :  interface wall energy

At this time, a condition for Hini. is represented by Formula 15. If Hini. disappears, the directions of magnetization of the first and second layers are influenced to each other due to the interface wall energy. The conditions that can hold the directions of magnetization of the first and second layers without reversing them are represented by Formulas 13 and 14. The medium No. 1-2 satisfies Formulas 13 and 14:

$$H_{C1} > \frac{\sigma_w}{2M_{s1}t_1} \qquad \text{...Formula 13}$$

$$H_{C2} > \frac{\sigma_w}{2M_{s2}t_2} \qquad \text{...Formula 14}$$

The magnetization of the second layer of the recording medium which satisfies conditions given by Formulas 12 to 14 at the room temperature is aligned in, e.g., the "A direction" $\Uparrow$ $(\uparrow \because \downarrow)$ by Hini. which satisfies following Formula 15 immediately before recording:

$$H_{C2} + \frac{\sigma_w}{2M_{s2}t_2} < |Hini.| < H_{C1} - \frac{\sigma_w}{2M_{s1}t_1} \qquad \text{...Formula 15}$$

At this time, the first layer is left in the previous recorded state (CONDITION 1a or 1b in Figs. 42 and 43).

CONDITIONS 1a and 1b are held immediately before recording.

Assume that the bias field Hb is applied in the "A direction" $\uparrow$.

Note that it is difficult to focus the bias field Hb to the same range as a radiation region (spot region) of the laser beam as well as normal magnetic fields. When a medium has a disk shape, recorded data (bit) is influenced by the field Hini. during one revolution, and CONDITION 1a or 1b appears again. The bit passes a portion near the laser beam radiation region (spot region). At this time, the bit in CONDITION 1a or 1b is influenced by a bias field Hb apply means since the bit approaches it. In this case, if the direction of magnetization of the first layer of the bit in CONDITION 1a having the direction of magnetization opposite to that of Hb is reversed by Hb, data which has been recorded one revolution before is lost. A condition for preventing this is given by:

$$H_{C1} > Hb + \frac{\sigma_w}{2M_{s1}t_1} \qquad ..\text{Formula 15-2}$$

The disk-like medium must satisfy this formula at the room temperature. In other words, a condition for determining Hb is expressed by Formula 15-2.

And then, the bit in CONDITION 1a or 1b reaches the spot region of the laser beam.

A low-temperature cycle will be described below with reference to Fig. 42.

— Low-temperature Cycle —

A low-level laser beam is radiated or the medium in CONDITION 1a or 1b, and a medium temperature is increased beyond $T_{comp.1}$. Thus, the medium type is shifted from P type to A type. Although the directions of the RE and TM spins of the first layer are left unchanged, the relationship between their strengths is reversed. As a result, the direction of magnetization of the first layer is reversed (CONDITION 1a → CONDITION $2_{La}$, CONDITION 1b → CONDITION $2_{Lb}$).

The laser beam is kept radiated, and the medium temperature then reaches $T_L$. Thus, the following relation is established:

$$H_{C1} > Hb < \frac{\sigma_w}{2M_{S1}t_1}$$

Even if Hb ↑ is present, CONDITION $2_{La}$ transits to CONDITION $3_L$. Meanwhile, since CONDITION $2_{Lb}$ remains the same regardless of Hb ↑, it becomes the same CONDITION $3_L$.

In this state, when the irradiated portion falls outside the spot region of the laser beam, the medium temperature begins to be decreased. When the medium temperature is decreased below $T_{comp.1}$, the medium type is restored from A type to original P type. The relationship between the strengths of the RE and TM spins of the first layer is reversed

$$( \uparrow \updownarrow \rightarrow \uparrow \downarrow ).$$

As a result, the direction of magnetization of the first layer is reversed to the "A direction" ⇑ CONDITION $4_L$).

CONDITION $4_L$ is held even when the medium temperature is decreased to the room temperature.

As a result, a bit in the "A direction" ⇑ is formed in the first layer.

A high-temperature cycle will be described below with reference to Fig. 43.

— High-temperature Cycle —

When a high-level laser beam is radiated on the medium in CONDITION 1, the medium temperature is increased to the low temperature $T_L$ via $T_{comp.1}$. As a result, the same CONDITION $2_H$ as CONDITION $3_L$ is established.

Upon radiation of the high-level laser beam, the medium temperature is further increased. When the medium temperature exceeds $T_{comp.2}$ of the second layer, the medium type is shifted from A type to P type. Although the directions of the RE and TM spins of the second layer are left unchanged, the relationship between their strengths is reversed

$$( \uparrow \downarrow \rightarrow \uparrow \updownarrow ).$$

For this reason, the direction of magnetization of the second layer is reversed, i.e., the "non-A-directed" ⇓ magnetization is attained (CONDITION $3_H$).

However, since $H_{C2}$ is still large at this temperature, the magnetization of the second layer will not be reversed by ↑ Hb. When the medium temperature is further increased and reaches $T_H$, the coercivities of the first and second layers are decreased since $T_H$ is near the Curie temperature. As a result, the medium satisfies one of conditions (1) to (3) given by the following formulas:

$$(1) \quad |H_{C1} - H_{C2}| < \frac{\sigma_w}{2M_{S1}t_1} + \frac{\sigma_w}{2M_{S2}t_2}$$

$$and \quad Hb > \frac{M_{S1}t_1 H_{C1} + M_{S2}t_2 H_{C2}}{M_{S1}t_1 + M_{S2}t_2}$$

$$-$$

$$(2) \quad Hb > H_{C1} + \frac{\sigma_w}{2M_{S1}t_1}$$

$$and \quad Hb > H_{C2} - \frac{\sigma_w}{2M_{S2}t_2}$$

EP 0 452 155 A2

$$(3) \quad Hb > H_{C1} - \frac{\sigma_w}{2M_{S1}t_1}$$

$$and \quad Hb > H_{C2} + \frac{\sigma_w}{2M_{S2}t_2}$$

For this reason, the directions of magnetization of the two layers are reversed at almost the same time, and follow the direction of Hb. This condition corresponds to CONDITION $4_H$.

When the irradiated portion falls outside the spot region of the laser beam in this condition, the medium temperature begins to fall. When the medium temperature is decreased below $T_{comp.2}$, the medium type is shifted from P type to A type. Although the directions of the RE and TM spins are left unchanged, the relationship between their strengths of the RE and TM spins of the first layer is reversed

$$(\downarrow\hat{\vdots} \rightarrow \downarrow\hat{\vdots}).$$

As a result, the direction of magnetization of the second layer is reversed, i.e., from ⇑ to the "non-A direction" ⇓ (CONDITION $5_H$).

When the medium temperature is further decreased from the temperature in CONDITION $5_H$ below $T_{comp.1}$, the medium type is restored from A type to original P type. The relationship between the strengths of the RE and TM spins of the first layer is then reversed

$$(\downarrow\hat{\vdots} \rightarrow \downarrow\hat{\uparrow}).$$

As a result, the direction of magnetization of the first layer is reversed to the "non-A direction" ⇓ (CONDITION $6_H$).

The medium temperature is then decreased from the temperature in CONDITION $6_H$ to the room temperature. Since $H_{C1}$ at the room temperature is sufficiently large (Formula 15-3), the magnetization ⇓ of the first layer will not be reversed by ↑ Hb, and CONDITION $6_H$ is maintained.

$$Hb < H_{C1} + \frac{\sigma_w}{2M_{s1}t_1} \qquad ...Formula\ 15\text{-}3$$

In this manner, a bit in the "non-A direction" ⇓ is formed in the first layer.

The principle of the over-write operation will be described in detail below using a medium No. 4-2 belonging to a recording medium of Class 4 (P type, Quadrant I, Type 4) shown in Table 1.

This medium No. 4-2 has a relation given by Formula 26:

$$T_R < T_L < T_H \lesssim T_{C1} \lesssim T_{C2} \qquad\qquad ...Formula\ 26$$

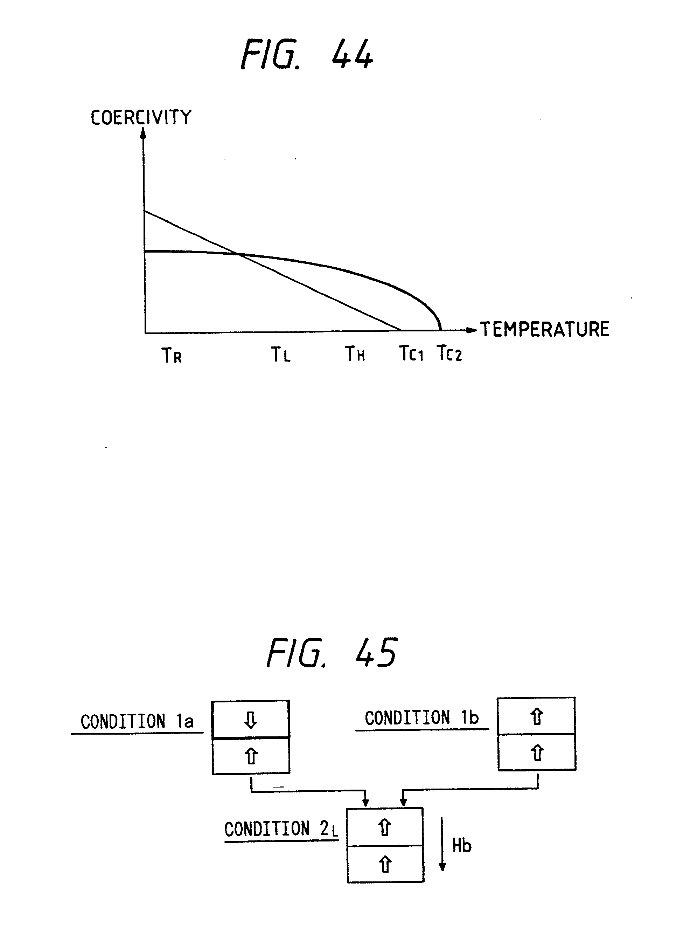

For the sake of simplicity, $T_H < T_{C1} < T_{C2}$ in the following description. Fig. 44 shows this relation as a graph.

A condition for reversing only the direction of magnetization of the second layer by the initial field Hini. at the room temperature $T_R$ without reversing that of the first layer is represented by Formula 27. The medium No. 4-2 satisfies Formula 27:

$$H_{C1} > H_{C2} + \frac{\sigma_w}{2M_{s1}t_1} + \frac{\sigma_w}{2M_{s2}t_2} \qquad ...Formula\ 27$$

In this case, a condition for Hini. is represented by Formula 30. When Hini. disappears, the directions of magnetization of the first and second layers are influenced by the exchange coupling force. Conditions for maintaining the directions of magnetization of the first and second layers without reversing them are given by Formulas 28 and 29. This medium No. 4-2 satisfies Formulas 28 and 29:

$$H_{C1} > \frac{\sigma_w}{2M_{s1}t_1} \qquad ...Formula\ 28$$

$$H_{C2} > \frac{\sigma_w}{2M_{s2}t_2} \qquad ...Formula\ 29$$

25

The magnetization of the second layer of the recording medium which satisfies the conditions given by Formulas 27 to 29 at the room temperature is aligned in, e.g., the "A direction" $\Uparrow$ ( $\Uparrow_{\downarrow}$ ) by Hini. which satisfies Formula 30 immediately before recording:

$$H_{C2} + \frac{\sigma_w}{2M_{s2}t_2} < |Hini.| < H_{C1} - \frac{\sigma_w}{2M_{s1}t_1} \qquad \text{...Formula}$$

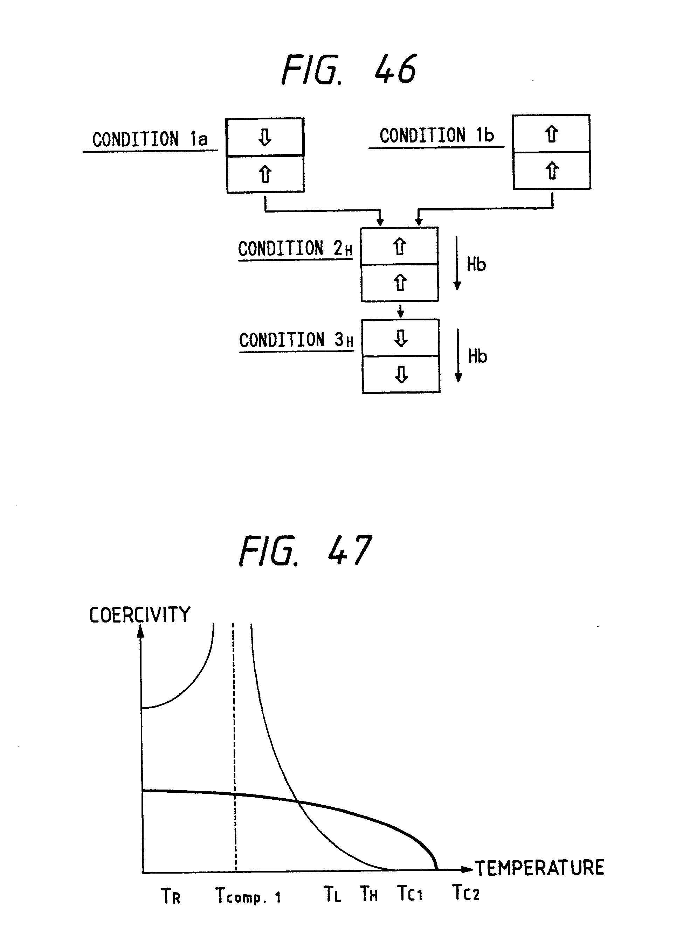

At this time, the first layer is 'left in the recorded state (CONDITIONS 1a and 1b in Figs. 45 and 46). CONDITIONS 1a and 1b are maintained immediately before recording.

The bias field Hb is assumed to be applied in the "non-A direction" $\downarrow$.

When the medium has a disk shape, a condition for inhibiting magnetization of a recorded bit (in particular, a bit in CONDITION 1b in which the direction of magnetization of the first layer is opposite to the direction of Hb) from being reversed by Hb when it approaches an Hb apply means is represented by Formula 30-2:

$$Hb < H_{C1} + \frac{\sigma_w}{2M_{s1}t_1} \qquad \text{...Formula 30-2}$$

The disk medium must satisfy this formula at the room temperature. A condition for inhibiting the initialized second layer from being reversed by Hb when it approaches the Hb apply means is represented by Formula 30-3:

$$HB < H_{C2} - \frac{\sigma_w}{2M_{s2}t_2} \qquad \text{...Formula 30-3}$$

In other words, conditions for determining Hb are Formulas 30-2 and 30-3.

And then, the bit in CONDITIONS 1a and 1b reaches the spot region of the laser beam.

A low-temperature cycle will be described below with reference to Fig. 45.

— Low-temperature Cycle —

A low-level laser beam is radiated on the medium in CONDITION 1, and the medium temperature is increased to $T_L$. Thus, a condition which can satisfy the following relation is established, and CONDITION 1a transits to CONDITION $2_L$:

$$H_{C1} + Hb < \frac{\sigma_w}{2M_{s1}t_1}$$

On the other hand, since CONDITION 1b is left unchanged, it becomes the same CONDITION $2_L$.

In CONDITION $2_L$, when the irradiated portion falls outside the spot region of the laser beam, the medium temperature begins to be decreased.

Even when the medium temperature is decreased to the room temperature, CONDITION $2_L$ is maintained since $H_{C1}$ at the room temperature is sufficiently large (see Formula 30-4).

$$Hb < H_{C1} + \frac{\sigma_w}{2M_{s1}t_1} \qquad \text{...Formula 30-4}$$

As a result, a bit in the "A direction" $\Uparrow$ is formed in the first layer.

A high-temperature cycle will be described below with reference to Fig. 46.

— High-temperature Cycle —

When a high-level laser beam is radiated on the medium in CONDITION 1, the medium temperature is increased to the low temperature $T_L$. As a result, CONDITION $2_H$ equal to CONDITION $2_L$ in the low-temperature cycle is established.

When the beam radiation continues and the medium temperature is further increased up to $T_H$, the coercivity is decreased since $T_H$ is closer to the Curie temperatures of the first and second layers. As a result, the medium satisfies one of conditions (1) to (3) given by the following formulas:

$$(1) \quad |H_{C1} - H_{C2}| < \frac{\sigma_w}{2M_{s1}t_1} + \frac{\sigma_w}{2M_{s2}t_2}$$

$$\text{and} \quad Hb > \frac{M_{s1}t_1 H_{C1} + H_{s2}t_2 H_{C2}}{M_{s1}t_1 + M_{s2}t_2}$$

$$(2) \quad Hb > H_{C1} + \frac{\sigma_w}{2M_{S1}t_1}$$

$$and \quad Hb > H_{C2} - \frac{\sigma_w}{2M_{S2}t_2}$$

$$(3) \quad Hb > H_{C1} - \frac{\sigma_w}{2M_{S1}t_1}$$

$$and \quad Hb > H_{C2} + \frac{\sigma_w}{2M_{S2}t_2}$$

For this reason, the directions of magnetization of the two layers are almost simultaneously reversed to follow the direction of Hb. This condition corresponds to CONDITION $3_H$.

When the irradiated portion falls outside the spot region of the laser beam in CONDITION $3_H$, the medium temperature is begins to be decreased. The medium temperature is then decreased to the room temperature. However, CONDITION $3_H$ is left unchanged.

Thus, a bit in the "non-A direction" $\downarrow$ is formed in the first layer.

The principle of the over-write operation will be described in detail below using a medium No. 5-2 belonging to a recording medium of Class 5 (A type, Quadrant II, Type 3) shown in Table 1.

This medium No. 5-2 has a relation given by Formula 31:

$$T_R < T_{comp.1} < T_L < T_H \lesssim T_{C1} \lesssim T_{C2} \qquad \text{...Formula 31}$$

For the sake of simplicity, $T_H < T_{C1} < T_{C2}$ in the following description. Fig. 47 shows this relation as a graph.

A condition for reversing only the direction of magnetization of the second layer by the initial field Hini. at the room temperature $T_R$ without reversing that of the first layer is represented by Formula 32. This medium No. 5-2 satisfies Formula 32:

$$H_{C1} > H_{C2} + \left| \frac{\sigma_w}{2M_{S1}t_1} - \frac{\sigma_w}{2M_{S2}t_2} \right| \qquad \text{...Formula 32}$$

In this case, a condition for Hini. is represented by Formula 35. When Hini. disappears, the directions of magnetization of the first and second layers are influenced to each other due to the interface wall energy. Conditions for maintaining the directions of magnetization of the first and second layers without reversing them are represented by Formulas 33 and 34. This medium No. 5-2 satisfies Formulas 33 and 34:

$$H_{C1} > \frac{\sigma_w}{2M_{S1}t_1} \qquad \text{...Formula 33}$$

$$H_{C2} > \frac{\sigma_w}{2M_{S2}t_2} \qquad \text{...Formula 34}$$

Magnetization of the second layer of the recording medium which satisfies the conditions given by Formulas 32 to 34 at the room temperature is aligned in, e.g., the "A direction" $\Uparrow$ $(\downarrow)$ by Hini. which satisfies Formula 35 immediately before recording:

$$H_{C2} + \frac{\sigma_w}{2M_{S2}t_2} < |Hini.| < H_{C1} + \frac{\sigma_w}{2M_{S1}t_1} \qquad \text{...Formula 35}$$

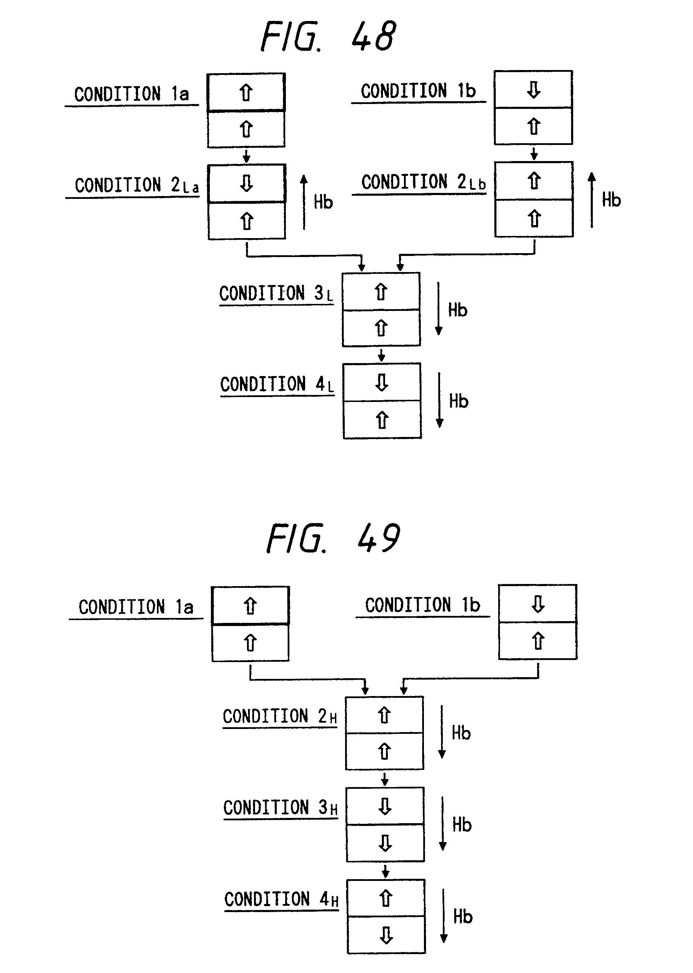

At this time, the first layer is left in the recorded state (CONDITION 1a or 1b in Figs. 48 and 49). This CONDITION 1a or 1b is maintained immediately before recording.

The bias field Hb is assumed to be applied in the "non-A direction" $\downarrow$.

When the medium has a disk shape, a condition for inhibiting magnetization of a previously recorded bit (in particular, a bit in CONDITION 1a in which the direction of magnetization of the first layer is opposite to the direction of Hb) from being reversed by Hb when it approaches an Hb apply means is represented by Formula

35-2:

$$Hb < H_{C1} - \frac{\sigma_w}{2M_{s1}t_1} \qquad \text{...Formula 35-2}$$

The disk medium must satisfy this formula at the room temperature. A condition for inhibiting the initialized second layer from being reversed by Hb when it approaches the Hb apply means is represented by Formula 35-3:

$$Hb < H_{C2} - \frac{\sigma_w}{2M_{s2}t_2} \qquad \text{...Formula 35-3}$$

In other words, conditions for determining Hb are Formulas 35-2 and 35-3.

And then, the bit in CONDITION 1a or 1b reaches the spot region of the laser beam.

A low-temperature cycle will be described below with reference to Fig. 48.

— Low-temperature Cycle —

A low-level laser beam is radiated on the medium in CONDITION 1, and the medium temperature is increased beyond $T_{comp.1}$. The medium type is changed from A type to P type. The relationship between the strengths of the RE and TM spins of the first layer is reversed although their directions are left unchanged. For this reason, the direction of magnetization of the first layer is reversed (CONDITION 1a $\rightarrow$ CONDITION $2_{La}$, CONDITION 1b $\rightarrow$ CONDITION $2_{Lb}$).

When the medium temperature is further increased from this state up to $T_L$, the following formula is satisfied:

$$H_{C1} + Hb < \frac{\sigma_w}{2M_{s1}t_1}$$

Thus, CONDITION $2_{La}$ transits to CONDITION $3_L$. Meanwhile, since CONDITION $2_{Lb}$ is left unchanged, it becomes the same CONDITION $3_L$.

When the irradiated portion falls outside the spot region of the laser beam in this condition, the medium temperature begins to be decreased. When the medium temperature is decreased below $T_{comp.1}$, the medium type is restored from P type to original A type. The relationship between the strengths of RE and TM spins of the first layer is reversed

$$( \downarrow\hat{\uparrow} - \downarrow\hat{\uparrow} ) .$$

As a result, the direction of magnetization of the first layer is reversed to the "non-A direction" $\Downarrow$ . This condition corresponds to CONDITION $4_L$.

The medium temperature is then decreased to the room temperature, and CONDITION $4_L$ is maintained.

As a result, a bit in the "non-A direction" $\Downarrow$ is formed in the first layer.

A high-temperature cycle will be described below with reference to Fig. 49.

—High-temperature Cycle —

When a high-level laser beam is radiated on the medium in CONDITION 1, the medium temperature is increased to the low temperature $T_L$ via $T_{comp.1}$. As a result, CONDITION $2_H$ equal to CONDITION $3_L$ is established.

The beam radiation continues and the medium temperature then reaches $T_H$. The coercivities of the two layers are decreased since $T_H$ is closer to the Curie temperatures of the first and second layers. As a result, the medium satisfies one of following conditions (1) to (3):

$$(1) \quad |H_{C1} - H_{C2}| < \frac{\sigma_w}{2M_{S1}t_1} + \frac{\sigma_w}{2M_{S2}t_2}$$

$$and \quad Hb > \frac{M_{S1}t_1H_{C1} + M_{S2}t_2H_{C2}}{M_{S1}t_1 + M_{S2}t_2}$$

$$(2) \quad Hb > H_{C1} + \frac{\sigma_w}{2M_{S1}t_1}$$

$$and \quad Hb > H_{C2} - \frac{\sigma_w}{2M_{S2}t_2}$$

$$(3) \quad Hb > H_{C1} - \frac{\sigma_w}{2M_{S1}t_1}$$

$$and \quad Hb > H_{C2} + \frac{\sigma_w}{2M_{S2}t_2}$$

For this reason, the directions of magnetization of the two layers are almost simultaneously reversed to follow the direction of Hb. This condition corresponds to CONDITION $3_H$.

When the irradiated portion falls outside the spot region of the laser beam in CONDITION $3_H$, the medium temperature begins to be decreased.

When the medium temperature is decreased below $T_{comp.1}$, the medium type is restored from P type to original A type. The relationship between the strengths of TM and RE spins of the first layer is reversed

$$( \uparrow_{\downarrow} \to \uparrow_{\downarrow} ).$$

For this reason, the direction of magnetization of the first layer is reversed to the "A direction" ⇑ (CONDITION $4_H$).

The medium temperature is decreased from the temperature in CONDITION $4_H$ to the room temperature. $H_{C1}$ at the room temperature is sufficiently large, and Formula 35-4 is satisfied:

$$Hb < H_{C1} + \frac{\sigma_w}{2M_{s1}t_1} \qquad ...Formula\ 35\text{-}4$$

Therefore, the magnetization of the first layer is stably maintained in CONDITION $4_H$.

Thus, a bit in the "A direction" is formed in the first layer.

The principle of the over-write operation will be described in detail below using a medium No. 7-2 belonging to a recording medium of Class 7 (P type, Quadrant III, Type 4) shown in Table 1.

This medium No. 7-2 has a relation given by Formula 41:

$$T_R < T_L < T_H \lesssim T_{C1} \lesssim T_{C2} \qquad\qquad ...Formula\ 41$$

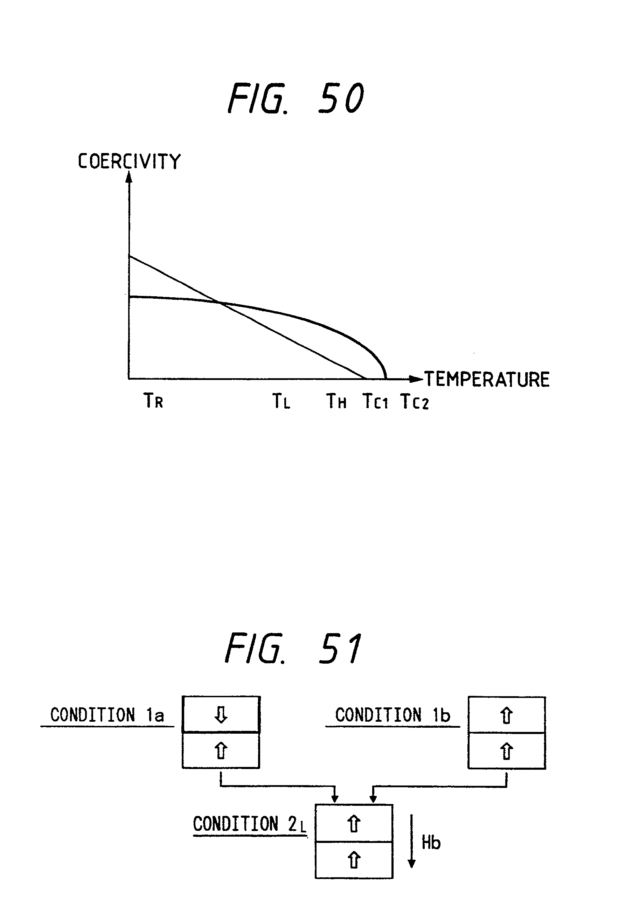

For the sake of simplicity, $T_H < T_{C1} < T_{C2}$ in the following description. Fig. 50 shows this relation as a graph.

A condition for reversing only the direction of magnetization of the second layer by the initial field Hini. at the room temperature $T_R$ without reversing that of the first layer is represented by Formula 42. This medium No. 7-2 satisfies Formula 42:

$$H_{C1} > H_{C2} + \frac{\sigma_w}{2M_{s1}t_1} + \frac{\sigma_w}{2M_{s2}t_2} \qquad ...Formula\ 42$$

A condition for Hini. at this time is given by Formula 45. When Hini. disappears, the directions of magnetization of the first and second layers influence to each other due to the interface wall energy. Conditions for maintaining the directions of magnetization of the first and second layers without reversing them are represented by Formulas 43 and 44. This medium No. 7-2 satisfies Formulas 43 and 44:

$$H_{C1} > \frac{\sigma_w}{2M_{s1}t_1} \qquad ...Formula\ 43$$

$$H_{C2} > \frac{\sigma_w}{2M_{s2}t_2} \qquad ...Formula\ 44$$

The magnetization of the second layer of the recording medium which satisfies Formulas 42 to 44 at the room temperature is aligned in, e.g., the "A direction" ⇑ $( \downarrow_{\uparrow} )$ by Hini. which satisfies the condition given by Formula 45 immediately before recording:

$$H_{C2} + \frac{\sigma_w}{2M_{s2}t_2} < |Hini.| < H_{C1} - \frac{\sigma_w}{2M_{s1}t_1} \qquad \text{...Formula 45}$$

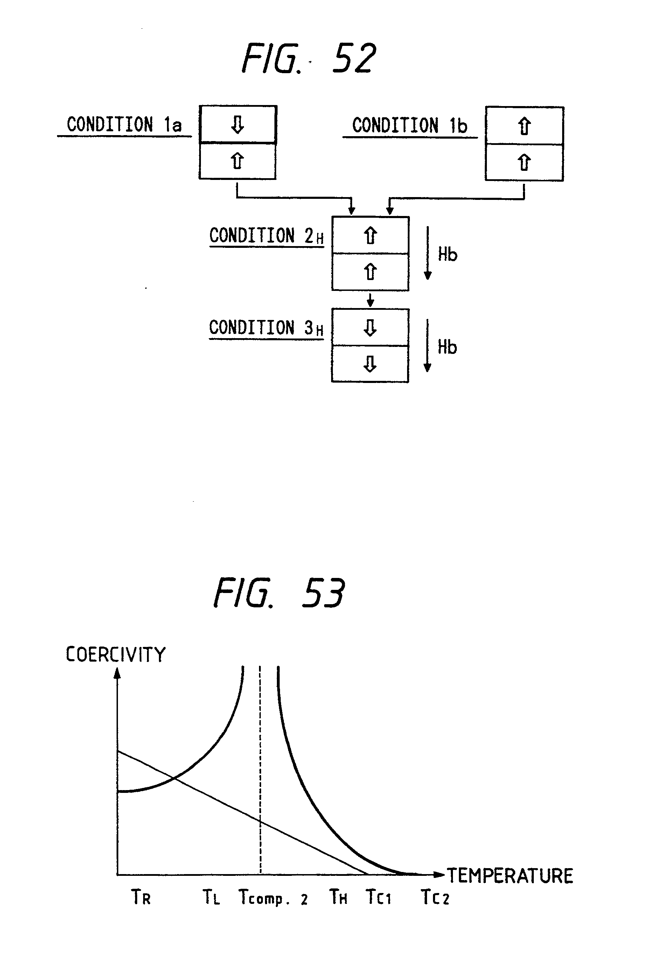

At this time, the first layer is left in the recorded state (CONDITION 1a or 1b in Figs. 51 and 52). CONDITION 1a or 1b is maintained immediately before recording.

The bias field Hb is assumed to be applied in the "non-A direction" $\downarrow$.

When the medium has a disk shape, a condition for inhibiting magnetization of a recorded bit (in particular, a bit in CONDITION 1b in which the direction of magnetization of the first layer is opposite to the direction of Hb) from being reversed by Hb when it approaches an Hb apply means is represented by Formula 45-2:

$$Hb < H_{C1} + \frac{\sigma_w}{2M_{s1}t_1} \qquad \text{...Formula 45-2}$$

The disk medium must satisfy this formula at the room temperature. A condition for inhibiting the initialized second layer from being reversed by Hb when it approaches the Hb apply means is represented by Formula 45-3:

$$HB < H_{C2} - \frac{\sigma_w}{2M_{s2}t_2} \qquad \text{...Formula 45-3}$$

In other words, conditions for determining Hb are Formulas 45-2 and 45-3.

And then, the bit in CONDITION 1a or 1b reaches the spot region of the laser beam.

A low-temperature cycle will be described below with reference to Fig. 51.

— Low-temperature Cycle —

A low-level laser beam is radiated or the medium in CONDITION 1, and the medium temperature is increased to $T_L$. Thus, the following condition is satisfied:

$$H_{C1} + Hb < \frac{\sigma_w}{2M_{s1}t_1}$$

Thus, CONDITION 1a transits to CONDITION $2_L$. Meanwhile, CONDITION 1b is maintained, and becomes the same CONDITION $2_L$.

When the irradiated portion falls outside the spot region of the laser beam in CONDITION $2_L$, the medium temperature begins to be decreased.

Since $H_{C1}$ is sufficiently large at the room temperature (see Formula 45-2), CONDITION $2_L$ can be maintained at the room temperature.

As a result, a bit in the "A direction" $\Uparrow$ is formed in the first layer.

A high-temperature cycle will be described below with reference to Fig. 52.

— High-temperature Cycle —

A high-level laser beam is radiated on the medium in CONDITION 1a or 1b, and the medium temperature is increased to the low temperature $T_L$. As a result, CONDITION $2_H$ equal to CONDITION $2_L$ is established.

The beam radiation continues and the medium temperature then reaches $T_H$. Since $T_H$ is closer to the Curie temperatures of the first and second layers, the medium satisfies one of the following conditions (1) to (3):

$$(1) \quad |H_{C1} - H_{C2}| < \frac{\sigma_w}{2M_{S1}t_1} + \frac{\sigma_w}{2M_{S2}t_2}$$

$$\text{and} \quad Hb > \frac{M_{S1}t_1H_{C1} + M_{S2}t_2H_{C2}}{M_{S1}t_1 + M_{S2}t_2}$$

$$(2) \quad Hb > H_{C1} + \frac{\sigma_w}{2M_{S1}t_1}$$

$$\text{and} \quad Hb > H_{C2} - \frac{\sigma_w}{2M_{S2}t_2}$$

$$(3) \quad Hb > H_{C1} - \frac{\sigma_w}{2M_{S1}t_1}$$

$$and \quad Hb > H_{C2} + \frac{\sigma_w}{2M_{S2}t_2}$$

For this reason, the directions of magnetization of the two layers are almost simultaneously reversed to follow the direction of $\downarrow$ Hb. This condition corresponds to CONDITION $3_H$.

When the irradiated portion falls outside the spot region of the laser beam in CONDITION $3_H$, the medium temperature begins to be decreased.

The medium temperature is then returned to the room temperature. However, CONDITION $3_H$ is left unchanged.

As a result, a bit in the "non-A direction" $\downarrow$ is formed in the first layer.

The principle of the over-write operation will be described in detail below using a medium No. 8-2 belonging to a recording medium of Class 8 (A type, Quadrant IV, Type 2) shown in Table 1.

This medium No. 8-2 has a relation given by Formula 46:

$$T_R < T_L < T_H \lesseqgtr T_{C1} \lesseqgtr T_{C2} \qquad \text{...Formula 46}$$

For the sake of simplicity, $T_H < T_{C1} < T_{C2}$ in the following description. $T_{comp.2}$ may be lower than, equal to, or higher than $T_L$ and $T_{C1}$. However, for the sake of simplicity, $T_L < T_{C1} < T_{comp.2}$ in the following description. Fig. 53 shows this relation as a graph.

A condition for reversing only the direction of magnetization of the second layer by the initial field Hini. at the room temperature $T_R$ without reversing that of the first layer is represented by Formula 47. This medium No. 8-2 satisfies Formula 47:

$$H_{C1} > H_{C2} + \left| \frac{\sigma_w}{2M_{S1}t_1} - \frac{\sigma_w}{2M_{S2}t_2} \right| \qquad \text{...Formula 47}$$

A condition for Hini. at this time is given by Formula 50. When Hini. disappears, the directions of magnetization of the first and second layers are influenced to each other due to the interface wall energy. Conditions for maintaining the directions of magnetization of the first and second layers without reversing them are represented by Formulas 48 and 49. This medium No. 8-2 satisfies Formulas 48 and 49:

$$H_{C1} > \frac{\sigma_w}{2M_{s1}t_1} \qquad \text{...Formula 48}$$

$$H_{C2} > \frac{\sigma_w}{2M_{s2}t_2} \qquad \text{...Formula 49}$$

The magnetization of the second layer of the recording medium which satisfies the conditions given by Formulas 47 to 49 at the room temperature is aligned in, e.g., the "A direction" $\Uparrow$ $(\uparrow\!\downarrow)$ by Hini. which satisfies the condition given by Formula 50 immediately before recording:

$$H_{C2} \frac{+ \sigma_w}{2M_{s2}t_2} < |Hini.| < H_{C1} + \frac{\sigma_w}{2M_{s1}t_1} \qquad \text{...Formula 50}$$

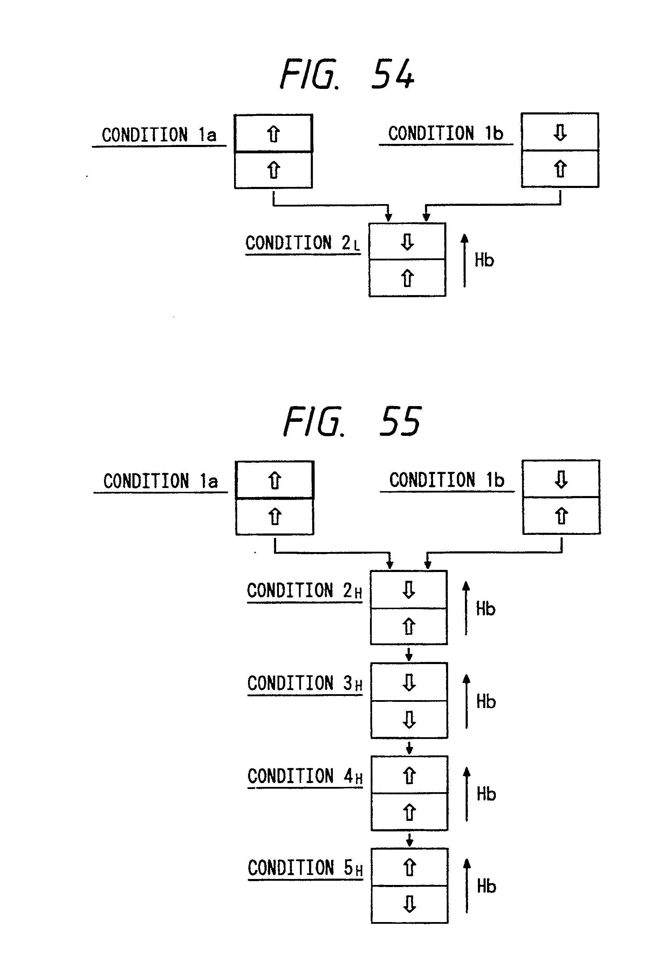

At this time, the first layer is left in the recorded state (CONDITION 1a or 1b in Figs. 54 and 55).

CONDITION 1a or 1b is maintained immediately before recording.

The bias field Hb is assumed to be applied in the "A direction" $\uparrow$.

When the medium has a disk shape, a condition for inhibiting magnetization of a bit recorded one revolution before (in particular, a bit in CONDITION 1b in which the direction of magnetization of the first layer is opposite to the direction of Hb) from being reversed by Hb when it approaches an Hb apply means is represented by Formula 50-2:

$$Hb < H_{C1} + \frac{\sigma_w}{2M_{s1}t_1} \qquad \text{...Formula 50-2}$$

The disk medium must satisfy this formula at the room temperature. In other words, a condition for determining Hb is given by Formula 50-2.

And then, the bit in CONDITION 1a or 1b reaches the spot region of the laser beam.

A low-temperature cycle will be described below with reference to Fig. 54.

— Low-temperature Cycle —

A low-level laser beam is radiated on the medium in CONDITION 1, and the medium temperature is increased to $T_L$. Thus, the following condition is satisfied:

$$H_{C1} + Hb < \frac{\sigma_w}{2M_{S1}t_1}$$

Thus, CONDITION 1a transits to CONDITION $2_L$. Meanwhile, CONDITION 1b is maintained, and becomes the same CONDITION $2_L$.

When the irradiated portion falls outside the spot region of the laser beam in CONDITION $2_L$, the medium temperature begins to be decreased. Even when the medium temperature is decreased to the room temperature, CONDITION $2_L$ is maintained since $H_{C1}$ is sufficiently large (see Formula 50-2).

As a result, a bit in the "non-A direction" $\downarrow$ is formed in the first layer.

A high-temperature cycle will be described below with reference to Fig. 55.

— High-temperature Cycle —

A high-level laser beam is radiated on the medium in CONDITION 1, and the medium temperature is increased to the low temperature $T_L$. As a result, CONDITION $2_H$ equal to CONDITION $2_L$ in the low-temperature cycle is established.

Upon radiation of the high-level laser beam, the medium temperature is further increased. When the medium temperature exceeds $T_{comp.2}$, the medium type is shifted from A type to P type. The relationship between the strengths of RE spin (↑) and TM spin $(\downarrow)$ of the second layer is reversed

$$(\uparrow\downarrow \rightarrow \uparrow\downarrow)$$

while their directions are left unchanged. As a result, the direction of magnetization of the second layer is reversed to the "non-A direction" $\downarrow$. This condition corresponds to CONDITION $3_H$.

However, since $H_{C2}$ is still large at this temperature, the magnetization $\downarrow$ of the second layer will not be reversed by ↑ Hb.

The beam radiation further continues, and the medium temperature is further increased up to $T_H$. Since the medium temperature is near the Curie temperatures of the first and second layers, the coercivities of the two layers are decreased. As a result, the medium satisfies one of the following conditions (1) to (3):

$$(1) \quad |H_{C1} - H_{C2}| < \frac{\sigma_w}{2M_{S1}t_1} + \frac{\sigma_w}{2M_{S2}t_2}$$

$$and \quad Hb > \frac{M_{S1}t_1H_{C1} + M_{S2}t_2H_{C2}}{M_{S1}t_1 + M_{S2}t_2}$$

$$(2) \quad Hb > H_{C1} + \frac{\sigma_w}{2M_{S1}t_1}$$

$$and \quad Hb > H_{C2} - \frac{\sigma_w}{2M_{S2}t_2}$$

$$(3) \quad Hb > H_{C1} - \frac{\sigma_w}{2M_{S1}t_1}$$

$$and \quad Hb > H_{C2} + \frac{\sigma_w}{2M_{S2}t_2}$$

For this reason, the directions of magnetization of the two layers are almost simultaneously reversed to follow the direction of ↑ Hb. This condition corresponds to CONDITION $4_H$.

When the irradiated portion falls outside the spot region of the laser beam in CONDITION $4_H$, the medium temperature begins to be decreased. When the medium temperature is decreased below $T_{comp.2}$, the medium type is restored from P type to original A type. The relationship between the strengths of RE spin (↓) and TM spin $(\hat{\updownarrow})$ is reversed

$$( \downarrow\hat{\updownarrow} \rightarrow \downarrow\hat{\updownarrow} )$$

while their directions are left unchanged. As a result, the direction of magnetization of the second layer is reversed to the "non-A direction" ↓ . In this condition, since $H_{C2}$ has already been considerably large, the magnetization ↓ of the second layer will not be reversed by ↑ Hb. This condition corresponds to CONDITION $5_H$.

The medium temperature is then decreased from the temperature in CONDITION $5_H$ to the room temperature. However, CONDITION $5_H$ is left unchanged.

In this manner, a bit in the "A direction" ⇑ is formed in the first layer.

[Problems to be Solved by the Invention]

On the other hand, in a conventional non-over-write magnetooptical recording medium, an SiN (silicon nitride) film is formed as an undercoating layer between a glass substrate and a magnetic thin film so as to protect the magnetic thin film and to enhance the Kerr effect (Japanese Patent Publication No. 62-27458).

When the undercoating SiN layer was similarly formed between the glass substrate and the magnetic thin film in the over-write capable medium of the basic invention, the effects of protecting the magnetic thin film and of enhancing the Kerr effect could be obtained like in the prior art.

However, the glass substrate suffers from some drawbacks, i.e., it is heavy, easy to crack, requires high cost, and so on. Thus, using a plastic substrate free from these drawbacks, a magnetooptical recording medium provided with an undercoating SiN Layer between the plastic substrate and the magnetic thin film was made on a exprimental basis.

The over-write capable magnetooptical recording medium provided with the SiN layer and the plastic substrate, however, suffered from large noise before information recording (to be referred to as "pre-recording noise" hereinafter; also referred to as "pre-erasure noise"), and had a C/N ratio as low as a value between 30 to 39 dB. The present invention has been made in consideration of the above-described problem, and has as its object to reduce pre-recording noise and to increase the C/N ratio.

## SUMMARY OF THE INVENTION

As a result of extensive studies for achieving the above object, when a "compound of nitrogen, oxygen, silicon, and aluminum" was used as an undercoating layer, it was found that pre-recording noise could be reduced, and a C/N ratio was consequently increased, thus achieving the present invention.

Therefore, according to the present invention, there is provided a magnetooptical recording medium which is constituted by stacking at least two layers including a first layer comprising a perpendicular magnetizable magnetic thin film as a recording layer, and a second layer comprising a perpendicular magnetizable magnetic thin film as a reference layer, and can perform an over-write operation by an optical modulation method, characterized in that the undercoating layer comprises a "compound of nitrogen, oxygen, silicon, and aluminum" (to be abbreviated to as "SIALON" hereinafter).

A plastic substrate used in the present invention includes a polymethylmethacrylate substrate, a polystyrene substrate, a polycarbonate substrate, and the like.

A SIALON film is formed on this substrate. It is preferable to perform a degassing treatment before formation of the film. After this treatment, a SIALON film is deposited on the plastic substrate by a conventional thin film formation technique, e.g., vacuum deposition, ion-plating, sputtering, or the like to have a thickness of 200 Å to 2,000 Å.

The "SIALON" itself used as a material is already known, and exhibits a refractive index of 1.8 to 2.3. As a sputtering target, the SIALON having a composition of " $Si_{5.5}Al_{0.5}O_{0.5}N_{7.5}$" is commercially available.

In general, a formed thin film and a deposition source have slightly different compositions. The present invention cannot deny this fact, either.

Thereafter, an over-write capable magnetic thin film is subsequently formed.

Furthermore, another SIALON film may be formed on this magnetic thin film although not formed in the embodiment.

## BRIEF DESCRIPTION OF THE DRAWINGS

Fig. 1 is a chart showing an output waveform of a laser beam;

Fig. 2 is a chart showing an output waveform of a laser beam;

Fig. 3 is a diagram showing a multilayered structure of a recording medium;

Fig. 4 is a diagram showing directions of magnetization of first and second layers of the recording medium;

Fig. 5 is a graph showing the relationship between a temperature and a coercivity;

Figs. 6 and 7 are diagrams showing changes in direction of magnetization in high- and low-temperature cycles in the first category of the basic invention;

Figs. 8 and 9 are diagrams showing changes in direction of magnetization shown in Figs. 6 and 7 for P- and A-type media, respectively;

Fig. 10 is a diagram showing changes in direction of magnetization in a high-temperature cycle in the second category of the basic invention;

Fig. 11A is a diagram showing changes in direction of magnetization in a low-temperature cycle in the second category of the basic invention;

Fig. 11B is a diagram showing in detail directions of magnetization in CONDITION $2_L$ in Fig. 11A;

Fig. 12 is a map for classifying media into four types;

Figs. 13A to 13D are graphs showing the relationship between a temperature and a coercivity of media of Type 1 to Type 4;

Fig. 14 is a graph showing the relationship between a temperature and a coercivity of a medium No. 1 of the basic invention;

Figs. 15 and 16 are diagrams showing changes in direction of magnetization in low- and high-temperature cycles of the medium No. 1, respectively;

Fig. 17 is a graph showing the relationship between a temperature and a coercivity of a medium No. 2 of the basic invention;

Figs. 18 and 19 are diagrams showing changes in direction of magnetization in low- and high-temperature cycles of the medium No. 2, respectively;

Fig. 20 is a graph showing the relationship between a temperature and a coercivity of a medium No. 3 of the basic invention;

Figs. 21 and 22 are diagrams showing changes in direction of magnetization in low- and high-temperature cycles of the medium No. 3, respectively;

Fig. 23 is a graph showing the relationship between a temperature and a coercivity of a medium No. 4 of the basic invention;

Figs. 24 and 25 are diagrams showing changes in direction of magnetization in low- and high-temperature cycles of the medium No. 4, respectively;

Fig. 26 is a graph showing the relationship between a temperature and a coercivity of a medium No. 5 of the basic invention;

Figs. 27 and 28 are diagrams showing changes in direction of magnetization in low- and high-temperature cycles of the medium No. 5, respectively;

Fig. 29 is a graph showing the relationship between a temperature and a coercivity of a medium No. 6 of the basic invention;

Figs. 30 and 31 are diagrams showing changes in direction of magnetization in low- and high-temperature cycles of the medium No. 6, respectively;

Fig. 32 is a graph showing the relationship between a temperature and a coercivity of a medium No. 7 of the basic invention;

Figs. 33 and 34 are diagrams showing changes in direction of magnetization in low- and high-temperature cycles of the medium No. 7, respectively;

Fig. 35 is a graph showing the relationship between a temperature and a coercivity of a medium No. 8 of the basic invention;

Figs. 36 and 37 are diagrams showing changes in direction of magnetization in low- and high-temperature cycles of the medium No. 8, respectively;

Fig. 38 is a graph showing the relationship between a temperature and a coercivity of a medium No. 9 of the basic invention;

Figs. 39 and 40 are diagrams showing changes in direction of magnetization in low- and high-temperature cycles of the medium No. 9, respectively;

Fig. 41 is a graph showing the relationship between a temperature and a coercivity of a medium No. 1-2 of the basic invention;

Figs. 42 and 43 are diagrams showing changes in direction of magnetization in low- and high-temperature cycles of the medium No. 1-2, respectively;

Fig. 44 is a graph showing the relationship between a temperature and a coercivity of a medium No. 4-2 of the basic invention;

Figs. 45 and 46 are diagrams showing changes in direction of magnetization in low- and high-temperature cycles of the medium No. 4-2, respectively;

Fig. 47 is a graph showing the relationship between a temperature and a coercivity of a medium No. 5-2 of the basic invention;

Figs. 48 and 49 are diagrams showing changes in direction of magnetization in low- and high-temperature cycles of the medium No. 5-2, respectively;

Fig. 50 is a graph showing the relationship between a temperature and a coercivity of a medium No. 7-2 of the basic invention;

Figs. 51 and 52 are diagrams showing changes in direction of magnetization in low- and high-temperature cycles of the medium No. 7-2, respectively;

Fig. 53 is a graph showing the relationship between a temperature and a coercivity of a medium No. 8-2 of the basic invention;

Figs. 54 and 55 are diagrams showing changes in direction of magnetization in low- and high-temperature cycles of the medium No. 8-2, respectively;

Fig. 56 is a partial sectional view of a magnetooptical recording medium according to an embodiment of the present invention;

Fig. 57 is a graph showing pre-recording noise data of the medium of the embodiment;

Fig. 58 is a graph showing pre-recording noise data of a medium of a comparative example;

Fig. 59 is a graph showing C/N ratio data of the medium of the embodiment; and

Fig. 60 is a graph showing C/N ratio data of the medium of the comparative example.

## DETAILED DESCRIPTION OF THE PREFERRED EMBODIMENT

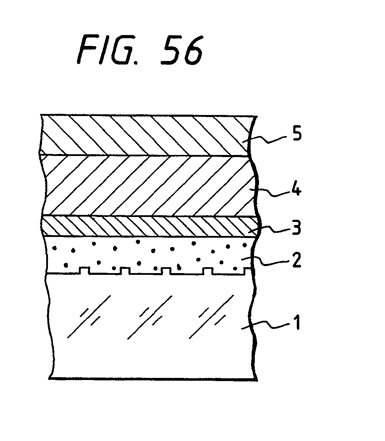

Fig. 56 is a partial sectional view of a magnetooptical recording medium according to this embodiment, and reference numeral 1 designates a transparent polycarbonate substrate which has a diameter of 13 cm and a thickness of 0.12 cm, and is formed with a spiral groove.

Sputtering using a target composition of "$Si_{5.5}Al_{0.5}O_{0.5}N_{7.5}$" was performed for 9 minutes 13 seconds on this substrate 1 using a sputtering apparatus under a condition of a degree of vacuum of 0.33 Pa and an argon flow rate of 88 SCCM, thereby foming a 1,000-Å thick SIALON layer 2 (refractive index = 2.0).

Thereafter, sputtering was performed to successively form a 500-Å thick first layer TbFeCO 3 and a 1,500-Å thick second layer DyTbFeCo 4 of a magnetic thin film.

Furthermore, thereafter, a 1,000-Å thick SiN (silicon nitride) layer for protecting the magnetic thin film was formed by sputtering.

In this manner, an over-write capable magnetooptical medium of Class 1 (P type) of the basic invention was obtained.

Next, the medium of the embodiment and a medium of a comparative example obtained following substantially the same procedures as in the embodiment except that an SiN undercoating layer was formed in place of the SIALON layer were compared and evaluated.

[Evaluation 1] Pre-recording Noise

A non-modulated high-level laser beam (power: 8 mW) was radiated on the medium while rotating the medium at 1,800 rpm, and at the same time, a magnetic field (-1,000 Oe) stronger than a bias field Hb and having a direction opposite to that of the field Hb was applied to the medium. Thus, the directions of magnetization of the first and second layers were aligned in one direction, and a state wherein no information was recorded could be attained.

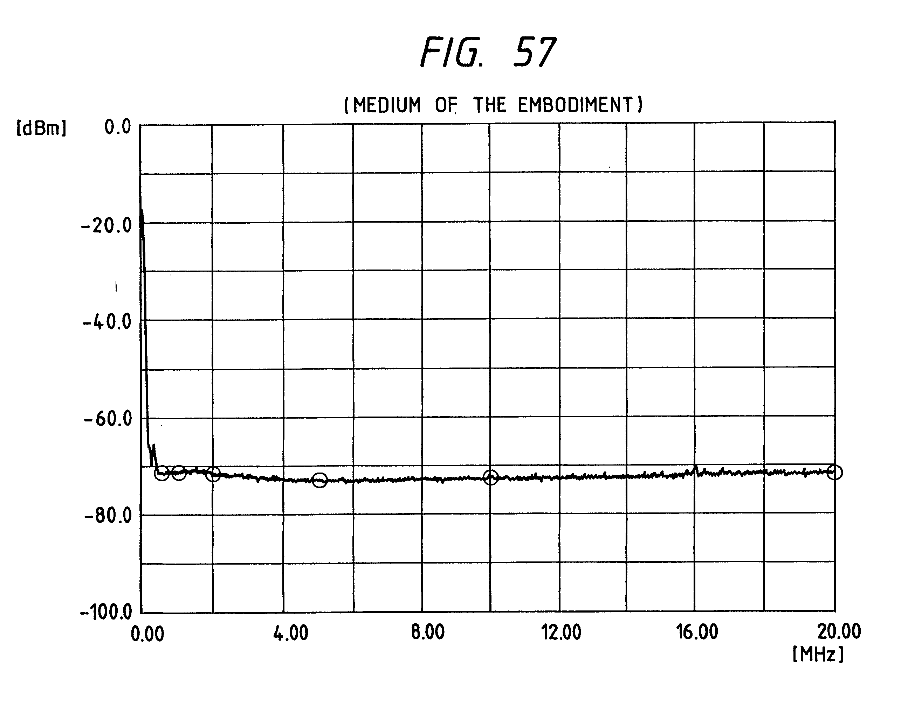

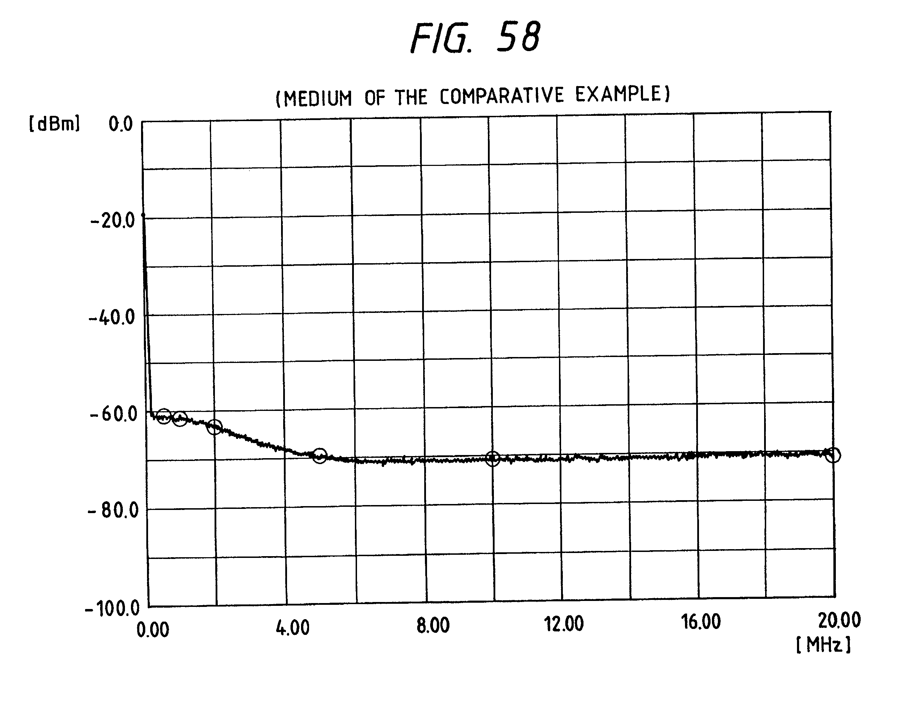

A reproduction laser beam (power: 1 mW) was radiated on the medium at a room temperature (24°C) while rotating the medium at 1,800 rpm, thereby reproducing information. Since no information was recorded at that time, a reproduced signal corresponded to pre-recording noise of the present invention. Results are shown in Fig. 57 (the medium of the embodiment) and Fig. 58 (the medium of thee comparative example). Measurement conditions of the medium of the embodiment and the medium of the comparative example, and noise levels at some frequencies shown in Figs. 57 and 58 are summarized below.

| (Medium of the Embodiment) | (Medium of the Comparative Example) |
|---|---|
| Spindle | Spindle |
| rev = 1,800 (rpm) | rev = 1,800 (rpm) |
| dir = CCW | dir = CCW |
| tracking = land | tracking = land |
| radius = 30.018 (mm) | radius = 29.991 (mm) |
| Noise level | Noise level |
| 0.5 (MHz) : -71.30 (dBm) | 0.5 (MHz) : -61.00 (dBm) |
| 1.0 (MHz) : -71.30 (dBm) | 1.0 (MHz) : -61.60 (dBm) |
| 2.0 (MHz) : -71.70 (dBm) | 2.0 (MHz) : -63.30 (dBm) |
| 5.0 (MHz) : -73.20 (dBm) | 5.0 (MHz) : -69.50 (dBm) |
| 10.0 (MHz) : -72.70 (dBm) | 10.0 (MHz) : -70.50 (dBm) |
| 20.0 (MHz) : -71.80 (dBm) | 20.0 (MHz) : -70.80 (dBm) |

As can be seen from the above description, the noise level of the medium of the embodiment shown in Fig. 57 is lower by several dB in a low-frequency range than that of the medium of the comparative example shown in Fig. 58.

[Evaluation 2] C/N Ratio

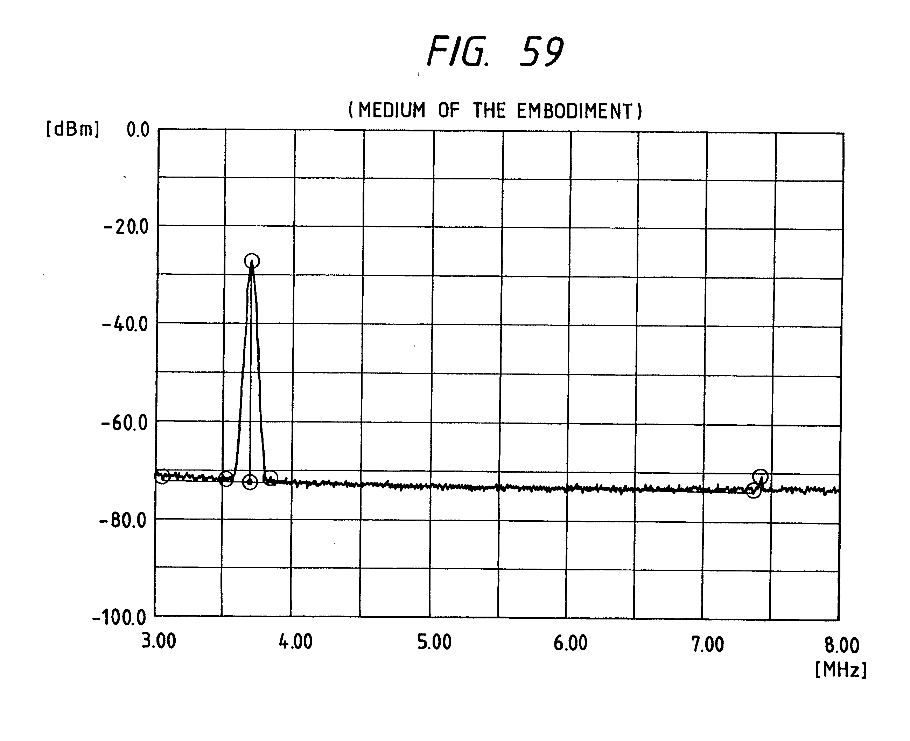

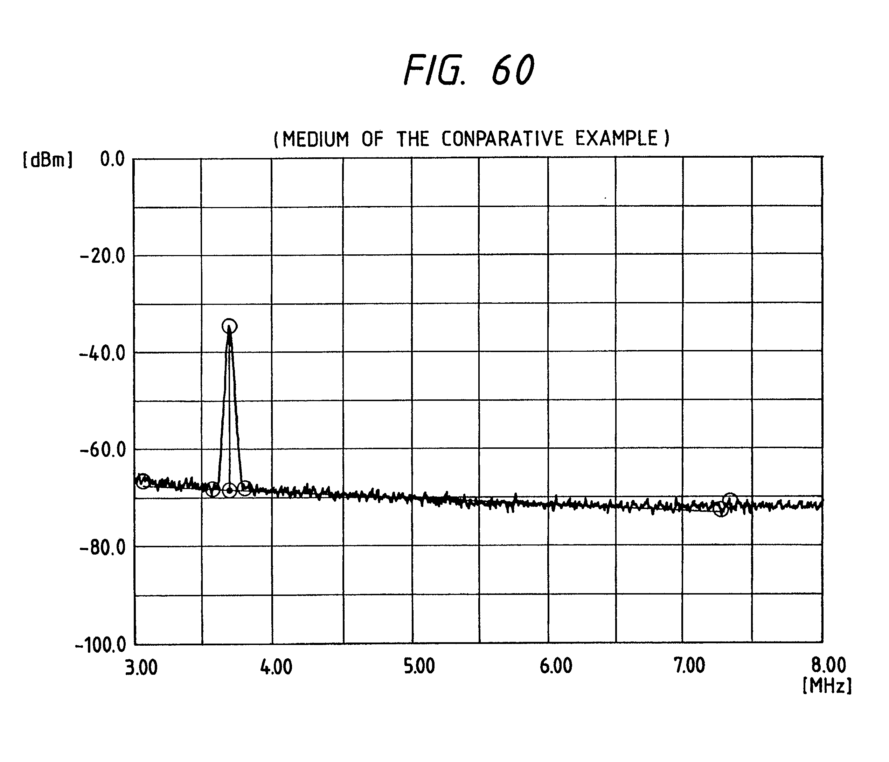

A reference signal having a duty ratio of 30% and a bit length of 0.75 μm was recorded while rotating the medium having been subjected to noise measurement in [Evaluation 1] at 1,800 rpm. A high-level laser power was set to be 8.5 mW, a low-level laser power was set to be 3.5 mW, and a bias field Hb was set to be 300 Oe. Results are shown in Fig. 59 (the medium of the embodiment, and Fig. 60 (the medium of the comparative example).

A reproduction laser beam (power: 1 mW) was radiated on the medium at a room temperature (25°C) while rotating the medium at 1,800 rpm to reproduce the reference signal, and a C/N ratio of the reference signal was then measured.

Measurement conditions of the medium of the embodiment and the medium of the comparative example are as follows.

|  (Medium of the Embodiment) | (Medium of the Comparative Example) |
| --- | --- |
| Spindle | Spindle |
| rev = 1,800 (rpm) | rev = 1,800 (rpm) |
| dir = CCW | dir = CCW |
| tracking = land | tracking = land |
| radius = 30.003 (mm) | radius = 30.013 (mm) |
| Function generator | Function generator |
| frequency = 3.76 (MHz) | frequency = 3.76 (MHz) |
| duty = 30 (%) | duty = 30 (%) |
| C/N = 45.10 | C/N = 33.80 |
| 2nd harmonic = 43.40 | 2nd harmonic = 36.10 |
| Carrier | Carrier |
| 1st = -27.40 (dBm) | 1st = -34.50 (dBm) |
| 2nd = -70.70 (dBm) | 2nd = -70.60 (dBm) |

As can be understood from the above description, the C/N ratio of the medium of the embodiment shown in Fig. 59 is higher by 10 dB or more than that of the medium of the comparative example shown in Fig. 60.

As described above, when a SIALON undercoating layer is used in an over-write capable magnetooptical recording medium using a plastic substrate, pre-recording noise can be reduced, and as a result, the C/N ratio can be increased.

## Claims

1. A multilayered magnetooptical recording medium capable of performing an over-write operation by an optical modulation method, comprising:
   (a) a substrate made of plastic;
   (b) an undercoating layer consisting of a compound of nitrogen, oxygen, silicon, and aluminum, and formed on said substrate; and
   (c) at least two perpendicular magnetizable magnetic films stacked on said substrate, one of said magnetic films functioning as a recording layer, another magnetic film functioning as a reference layer, and these layers being magnetically coupled.

2. A recording medium according to claim 1, wherein the compound has a refractive index of 1.8 to 2.3.

3. A recording medium according to claim 1, wherein the undercoating layer is 200Å - 2000Å thick.

# FIG. 1

BEAM
INTENSITY

HIGH LEVEL - - - - - - -

LOW LEVEL - - - - - -

VERY LOW LEVEL

ZERO LEVEL                                    TIME

EXAMPLE OF TWO-VALUED        1 1 1 0 0 1 1 1 1 0 0 0
INFORMATION TO BE
RECORDED

# FIG. 2

BEAM
INTENSITY

HIGH LEVEL - - - - - - -                    LEADING
                                            BEAM
LOW LEVEL - - - - - -

                                            TRAILING
                                            BEAM

BASIS LEVEL - - - - - -

ZERO LEVEL                                    TIME

EXAMPLE OF TWO-VALUED        1 1 1 0 0 1 1 . 1 1 0 0 0
INFORMATION TO BE
RECORDED

# FIG. 3

| | |
|---|---|
| FIRST LAYER | : RECORDING LAYER |
| SECOND LAYER | : REFERENCE LAYER |

# FIG. 4

| FIRST LAYER | ⇑ ⇓ ⇓ ⇑ ⇓ ⇑ ⇓ ⇓ * |
|---|---|
| SECOND LAYER | ⇑ ⇑ ⇑ ⇑ ⇑ ⇑ ⇑ ⇑ |

# FIG. 5

# FIG. 6

CONDITION 1 ☐ × ☐ FIRST LAYER
☐ ⇧ ☐ SECOND LAYER

CONDITION 2ₕ ☐ ☐ ↓ Hb
☐ ⇩ ☐ ↓

CONDITION 3ₕ ☐ ⇩ ☐ ↓ Hb   OR   ☐ ⇧ ☐
☐ ⇩ ☐ ↓        ☐ ⇩ ☐

# FIG. 7

CONDITION 1 ☐ × ☐
☐ ⇧ ☐

CONDITION 2ₗ ☐ ☐ ↓ Hb
☐ ⇧ ☐ ↓

CONDITION 3ₗ ☐ ⇧ ☐ ↓ Hb   OR   ☐ ⇩ ☐
☐ ⇧ ☐ ↓        ☐ ⇧ ☐

# FIG. 8

P-TYPE

JUST
BEFORE
RECORDING

| × |
|---|
| ⇧ |

LOW
TEMPERATURE
CYCLE

| ⇧ |
|---|
| ⇧ |
↓ Hb

(CONDITION AT
ROOM TEMPERATURE)

HIGH
TEMPERATURE
CYCLE

| ⇩ |
|---|
| ⇩ |
↓ Hb

(CONDITION AT
ROOM TEMPERATURE)

# FIG. 9

A-TYPE

JUST
BEFORE
RECORDING

| × |
|---|
| ⇧ |

LOW
TEMPERATURE
CYCLE

| ⇩ |
|---|
| ⇧ |
↓ Hb

(CONDITION AT
ROOM TEMPERATURE)

HIGH
TEMPERATURE
CYCLE

| ⇧ |
|---|
| ⇩ |
↓ Hb

(CONDITION AT
ROOM TEMPERATURE)

# FIG. 10

# FIG. 11A

# FIG. 11B

# FIG. 12

RE RICH (1ST LAYER)

QUADRANT II | QUADRANT I

TM RICH ← → RE RICH

(2ND LAYER) QUADRANT III | QUADRANT IV (2ND LAYER)

TM RICH (1ST LAYER)

# FIG. 13A

TYPE1

COERCIVITY

TEMPERATURE

## FIG. 13B

TYPE 2

COERCIVITY

TEMPERATURE

## FIG. 13C

TYPE 3

COERCIVITY

TEMPERATURE

## FIG. 13D

TYPE 4
COERCIVITY

TEMPERATURE

## FIG. 14

COERCIVITY

TEMPERATURE

$T_R$   $T_{C1}$   $T_{C2}$
$T_L$   $T_H$

$T_{comp.1}$   $T_{comp.2}$

# FIG. 15

CONDITION 1

CONDITION 2ʟ    Hb

CONDITION 3ʟ    Hb

CONDITION 4ʟ    Hb

# FIG. 16

CONDITION 1

CONDITION 2н    Hb

CONDITION 3н    Hb

CONDITION 4н    Hb

CONDITION 5н    Hb

CONDITION 6н    Hb

CONDITION 7н    Hb

CONDITION 8н    Hb

## FIG. 17

COERCIVITY

TEMPERATURE

$T_R$  $T_{C1}$  $T_L$  $T_{comp.2}$  $T_{C2}$  $T_H$

## FIG. 18

CONDITION 1    ⇑ | ⇑    OR    ⇓ | ⇑

CONDITION $2_L$    ⇑    Hb

CONDITION $3_L$    ⇑ | ⇑    Hb

## FIG. 19

CONDITION 1

CONDITION 2H ↑ Hb

CONDITION 5H ↑ Hb

CONDITION 3H ⇓ Hb

CONDITION 6H ⇓ Hb

CONDITION 4H Hb

CONDITION 7H ⇓ ⇓ Hb

## FIG. 20

COERCIVITY

TEMPERATURE

$T_R$    $T_{comp.1}$    $T_{C1}$  $T_L$    $T_{C2}$  $T_H$

# FIG. 21

CONDITION 1

| ⇧ |
|---|
| ⇧ |

OR

| ⇩ |
|---|
| ⇧ |

CONDITION 2L

|   |
|---|
| ⇧ |

↓ Hb

CONDITION 3L

| ⇩ |
|---|
| ⇧ |

↓ Hb

CONDITION 4L

| ⇧ |
|---|
| ⇧ |

↓ Hb

# FIG. 22

CONDITION 1

| ⇧ |
|---|
| ⇧ |

OR

| ⇩ |
|---|
| ⇧ |

CONDITION 2H

|   |
|---|
| ⇧ |

↓ Hb

CONDITION 3H

|   |
|---|
|   |

↓ Hb

CONDITION 4H

|   |
|---|
| ⇩ |

↓ Hb

CONDITION 5H

| ⇧ |
|---|
| ⇩ |

↓ Hb

CONDITION 6H

| ⇩ |
|---|
| ⇩ |

↓ Hb

# FIG. 23

COERCIVITY

TEMPERATURE

$T_R$   $T_{C1}$   $T_{C2}$
       $T_L$     $T_H$

49

FIG. 24

FIG. 25

FIG. 26

# FIG. 27

# FIG. 28

# FIG. 29

51

# FIG. 30

CONDITION 1

CONDITION 2$_L$    Hb

CONDITION 3$_L$    Hb

# FIG. 31

CONDITION 1

CONDITION 2$_H$    Hb

CONDITION 3$_H$    Hb

CONDITION 4$_H$    Hb

CONDITION 5$_H$    Hb

# FIG. 32

COERCIVITY

TEMPERATURE

$T_R$    $T_{C1}$   $T_{C2}$
      $T_L$    $T_H$

# FIG. 33

CONDITION 1

| ⇧ |  | ⇩ |
|---|---|---|
| ⇧ | OR | ⇧ |

CONDITION 2L

|  |
|---|
| ⇧ |

↓ Hb

CONDITION 3L

| ⇧ |
|---|
| ⇧ |

↓ Hb

# FIG. 34

CONDITION 1

| ⇧ |  | ⇩ |
|---|---|---|
| ⇧ | OR | ⇧ |

CONDITION 2H

|  |
|---|
| ⇧ |

↓ Hb

CONDITION 3H

|  |
|---|
|  |

↓ Hb

CONDITION 4H

|  |
|---|
| ⇩ |

↓ Hb

CONDITION 5H

| ⇩ |
|---|
| ⇩ |

↓ Hb

# FIG. 35

COERCIVITY

TEMPERATURE

TR          TC1          TC2
            TL      Tcomp.2  TH

## FIG. 36

CONDITION 1    ⇩ / ⇧    OR    ⇧ / ⇧

CONDITION 2L    / ⇧    Hb

CONDITION 3L    ⇩ / ⇧    Hb

## FIG. 37

CONDITION 1    ⇩ / ⇧    OR    ⇧ / ⇧

CONDITION 2H    / ⇧    Hb

CONDITION 3H    / ⇩    Hb

CONDITION 4H    /    Hb

CONDITION 5H    / ⇧    Hb

CONDITION 6H    / ⇩    Hb

CONDITION 7H    ⇧ / ⇩    Hb

## FIG. 38

COERCIVITY

TEMPERATURE

TR    TC1 / TL    TC2 / TH

# FIG. 39

# FIG. 40

# FIG. 41

55

# FIG. 42

CONDITION 1a

CONDITION 1b

CONDITION 2La

CONDITION 2Lb

CONDITION 3L

CONDITION 4L

Hb

# FIG. 43

CONDITION 1a

CONDITION 1b

CONDITION 2H

CONDITION 3H

CONDITION 4H

CONDITION 5H

CONDITION 6H

Hb

# FIG. 44

COERCIVITY

TEMPERATURE

$T_R$  $T_L$  $T_H$  $T_{C1}$  $T_{C2}$

# FIG. 45

CONDITION 1a

CONDITION 1b

CONDITION 2L

Hb

# FIG. 46

# FIG. 47

# FIG. 48

CONDITION 1a

CONDITION 1b

CONDITION 2La          Hb

CONDITION 2Lb          Hb

CONDITION 3L          Hb

CONDITION 4L          Hb

# FIG. 49

CONDITION 1a

CONDITION 1b

CONDITION 2H          Hb

CONDITION 3H          Hb

CONDITION 4H          Hb

# FIG. 50

COERCIVITY

TEMPERATURE

$T_R$    $T_L$    $T_H$ $T_{C1}$ $T_{C2}$

# FIG. 51

CONDITION 1a    ⇩
                ⇧

CONDITION 1b    ⇧
                ⇧

CONDITION 2$_L$    ⇧    ↓ Hb
                   ⇧

# FIG. 52

# FIG. 53

# FIG. 54

# FIG. 55

# FIG. 56

FIG. 57

(MEDIUM OF THE EMBODIMENT)

# FIG. 58

(MEDIUM OF THE COMPARATIVE EXAMPLE)

EP 0 452 155 A2

# FIG. 59

(MEDIUM OF THE EMBODIMENT)

EP 0 452 155 A2

# FIG. 60

EP 0 452 155 A2

(MEDIUM OF THE CONPARATIVE EXAMPLE)